(19) Europäisches Patentamt
European Patent Office
Office européen des brevets

(11) **EP 2 250 645 B1**

(12) **EUROPEAN PATENT SPECIFICATION**

(45) Date of publication and mention
of the grant of the patent:
**08.05.2013 Bulletin 2013/19**

(51) Int Cl.:
***G11B 7/135*** (2012.01)    ***G02B 5/18*** (2006.01)

(21) Application number: **09721168.4**

(22) Date of filing: **03.03.2009**

(86) International application number:
**PCT/JP2009/054367**

(87) International publication number:
**WO 2009/113467 (17.09.2009 Gazette 2009/38)**

(54) **OPTICAL PICKUP DEVICE AND OPTICAL INFORMATION PROCESSING APPARATUS USING THE OPTICAL PICKUP DEVICE**

OPTISCHE AUFNAHMEVORRICHTUNG UND OPTISCHES INFORMATIONSVERARBEITUNGSGERÄT MIT DER OPTISCHEN AUFNAHMEVORRICHTUNG

DISPOSITIF DE CAPTEUR OPTIQUE ET APPAREIL DE TRAITEMENT D'INFORMATIONS OPTIQUES UTILISANT LE DISPOSITIF DE CAPTEUR OPTIQUE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **14.03.2008 JP 2008065733**

(43) Date of publication of application:
**17.11.2010 Bulletin 2010/46**

(73) Proprietor: **Ricoh Company, Ltd.
Tokyo 143-8555 (JP)**

(72) Inventor: **HIRAI, Hideaki
Yokohama-shi
Kanagawa 226-0018 (JP)**

(74) Representative: **White, Duncan Rohan
Marks & Clerk LLP
90 Long Acre
London
WC2E 9RA (GB)**

(56) References cited:
**WO-A1-2007/077652      JP-A- 3 278 002
JP-A- 2005 141 849      JP-A- 2006 318 568
JP-A- 2006 318 568      US-A1- 2006 256 696
US-A1- 2007 229 955**

EP 2 250 645 B1

**Description**

TECHNICAL FIELD

The present invention generally relates to an optical pickup device having optical elements and an optical information processing apparatus using the optical pickup device in which light from a light source is suitably output.

BACKGROUND ART

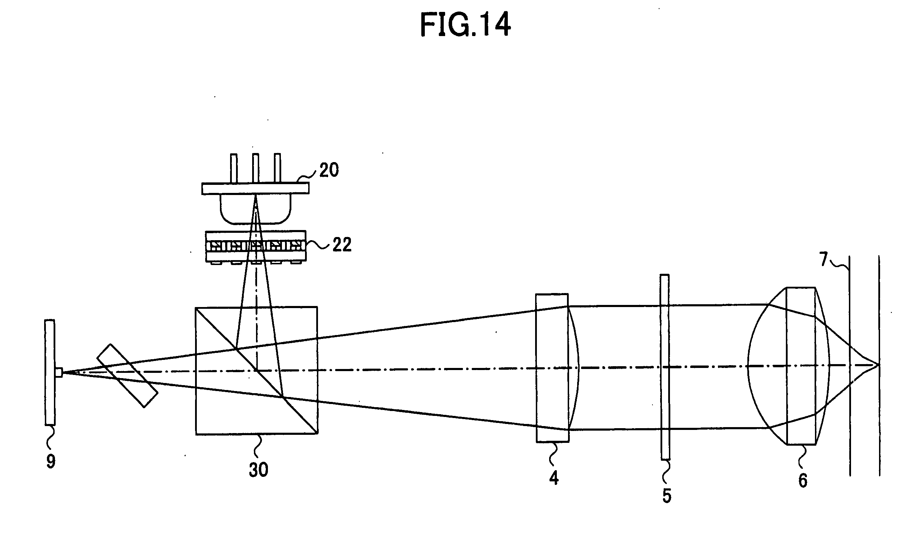

FIG. 14 is a schematic diagram showing a conventional optical pickup device. In FIG. 14, coherent light output from a light source 20 is output as linearly polarized light and the linearly polarized light (outputting route light) travels toward an optical recording medium 7 which optically records information. A polarization diffraction element 22 is at a light output side of the light source 20, and the outputting route light is input to the polarization diffraction element 22.

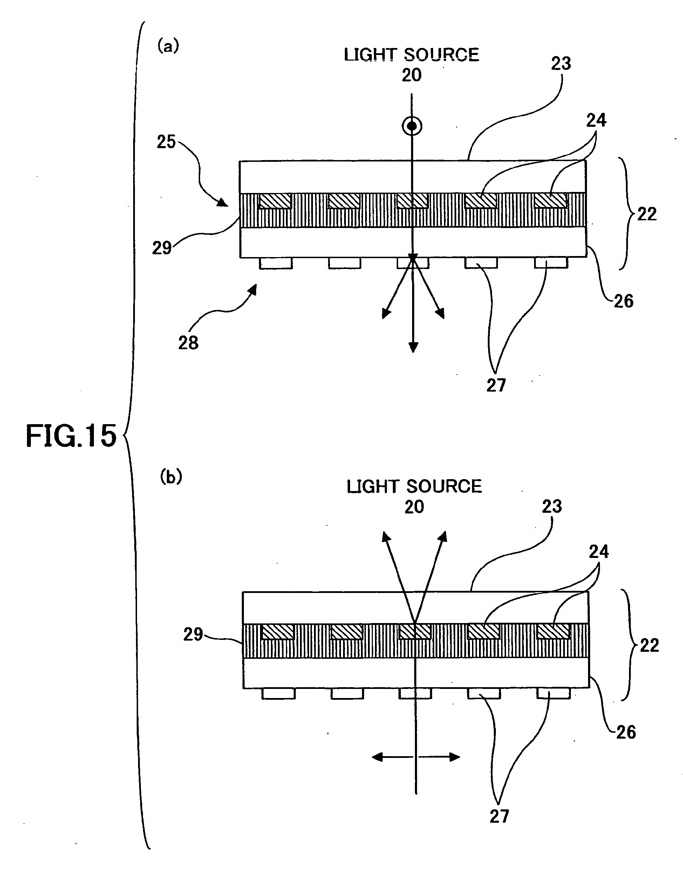

FIG. 15 is a cut-away view of the polarization diffraction element 22 shown in FIG. 14 (for example, see paragraphs 0018 and 0019 of Patent Document 1). In FIG. 15, (a) shows a light route of outputting light and (b) shows a light route of returning light.

The polarization diffraction element 22 is formed by adhering a polarization diffraction structure 25 to a three-beam diffraction structure 28 with the use of a translucent adhesive 29 so that a first translucent planar substrate 23 is disposed at the side of the light source 20. The polarization diffraction structure 25 is formed by disposing plural birefringent members 24 having a grating shape on a surface at the opposite side of the light source 20 of the first translucent planar substrate 23. The three-beam diffraction structure 28 is formed by disposing plural diffraction gratings 27 on a surface of the opposite side of the light source 20 of a second translucent planar substrate 28.

The polarization diffraction structure 25 includes the plural birefringent members 24 formed of optical crystals or polymer liquid crystals having a birefringent property so that the plural birefringent members 24 form a periodic concave-convex structure. The refractive index of the birefringent member 24 is the same as the refractive index of the translucent adhesive 29 for predetermined linearly polarized light output from the light source 20, and is different from the refractive index of the translucent adhesive 29 for linearly polarized light orthogonal to the linearly polarized light output from the light source 20.

In FIG. 15(a), outputting route light input to the polarization diffraction element 22 is input to the polarization diffraction structure 25 via the first translucent planar substrate 23.

The polarization diffraction structure 25 functions as an isotropic refraction layer for TM polarized light which is outputting route light input from the light source 20 and transmits the TM polarized light as it is; because the refractive index of the birefringent member 24 becomes substantially the same as the refractive index of the translucent adhesive 29. The TM polarized light is light whose oscillation direction of the magnetic field is parallel to the long length direction of a grating groove of the polarization diffraction structure 25.

That is, in the polarization diffraction structure 25 shown in FIG. 15(a), the TM polarized light input from the light source 20 is transmitted through the polarization diffraction structure 25, without being diffracted. The TM polarized light transmitted through the polarization diffraction structure 25 is input to the three-beam diffraction structure 28 via the second translucent planar substrate 28.

Returning to FIG. 14, the optical pickup device includes a polarization prism 30, and the polarization prism 30 reflects light (laser beam) transmitted through the polarization diffraction element 22 to the side of the optical recording medium 7.

Light (laser beam) reflected from a recoding surface of the optical recording medium 7 travels in a direction opposite to the direction of the outputting route light as returning route light. The returning route light (returning route beam) output from an objective lens 6 is input to a 1/4 wavelength plate 5, the 1/4 wavelength plate 5 converts the returning route beam into linearly polarized light whose polarization direction (the oscillation direction of the electric field and the magnetic field) is rotated by 90 degrees from outputting route light, and the linearly polarized light is input to a collimate lens 4.

A laser beam output from the collimate lens 4 is input to the polarization prism 30, and the light beam is input to a light receiving element 9 via the polarization prism 30. At this time, at the polarization prism 30, for example, approximately 95% of the returning route beam is transmitted and the remaining approximately 5% of the returning route beam is reflected to the side of the light source 20.

The returning route beam (the returning route light, hereinafter, in some cases, referred to as returning light) reflected by the polarization prism 30 is input to the polarization diffraction element 22.

The polarization direction of the returning light has been rotated by 90 degrees (orthogonal to) the direction of the outputting light) from the polarization direction of the outputting light, and the polarization diffraction structure 25 of the polarization diffraction element 22 generates a phase difference for the returning light due to a refractive index difference between the birefringent member 24 and the translucent adhesive 29. With this, the polarization diffraction element 22 functions as the diffraction grating.

That is, as shown in FIG. 15(b), the polarization diffraction structure 25 diffracts the returning light (TE polarized light) and generates high-order light of ± first order or more, and decreases 0-order light.

With this, inputting the returning light to the light source 20 can be lowered. Consequently, the light source 20 is normally operated, and writing information in the optical recording medium 7 and reading information from the optical recording medium 7 can be suitably performed. For example, when the light source 20 is a laser light source having high power, the laser beam can be stably oscillated.

However, since Japanese Unexamined Patent Publication No 2002-170272 includes an adhering structure using the translucent adhesive 29, selection of elements to be adhered in the polarization diffraction element 22 is very complicated and manufacturing the polarization diffraction element 22 is practically very difficult.

In order to solve the above problem, Japanese Unexamined Patent Publication No 2006-318568 and US Patent Publication No 2006/256696 discloses an optical pickup device.

FIG. 16 is a schematic diagram showing another conventional optical pickup device in Patent Document 2. As shown in FIG. 16, the optical pick up device includes an optical element 32 instead of using the polarization diffraction element 22 shown in FIG. 14.

FIG. 17 is a cut-away view of the optical element 32 shown in FIG. 16. In FIG. 17, (a) shows a light route of outputting light and (b) shows a light route of returning light.

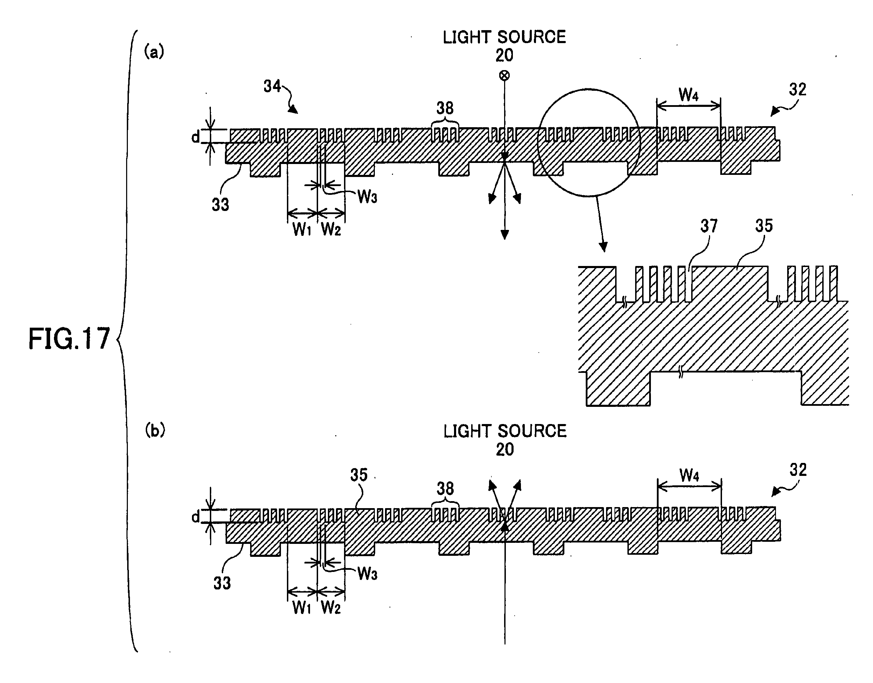

As shown in FIG. 17, the optical element 32 includes a diffraction structure 34 on a surface at the side of the light source 20 of a translucent substrate 33. The diffraction structure 34 is formed with the translucent substrate 33 as one unit by using the same resin material as the material of the translucent substrate 33.

The diffraction structure 34 includes a diffraction grating in which plural convex sections 35 having a grating shape are arrayed in the lateral direction (the width direction) in FIG. 17 with a constant interval, plural grating grooves 37 disposed between two adjacent convex sections 35, and plural fine structural bodies 38 (fine periodic structural bodies) formed between the grating grooves 37 on the surface of the translucent substrate 33 at the side of the light source 20.

When parameters of the fine structural bodies 38 are adjusted, in the diffraction structure 34, first linearly polarized light (whose magnetic field oscillation direction is parallel to the long length direction of the grating groove 37), which is outputting linearly polarized light output from the light source 20 and travels forward to the optical recording medium 7, is transmitted through the diffraction structure 34 as it is without diffracting TM polarized light input from the light source 20.

In addition, the diffraction structure 34 diffracts first linearly polarized light and second linearly polarized light (whose magnetic field oscillation direction is orthogonal to the long length direction of the grating groove 37) whose polarization direction is orthogonal to the polarization direction of the first linearly polarized light, which is returning light reflected from the optical recording medium 7, and travels toward the light source 20 after being output from the light source 20, and generates diffraction light other than 0-order light. With this, conditions to minimize the 0-order light are described. The conditions are the same as the conditions for not inputting the TE polarized light (returning light) to the light source 20.

In FIG. 17, descriptions of reference signs W1, W2, W3, and W4 are omitted.

In Japanese Unexamined Patent Publication No 2006-318568 and US Patent Publication No 2006/256696, specific values arc described. In the fine structural body 38, since the aspect ratio is 30 times or more (for example, see paragraphs 0065 and 0076), it is understandable that the manufacturing of the fine structural body 38 is difficult. In addition, in such a high aspect ratio, quality assurance must be required so that the optical element 32 is defective when the optical element 32 is assembled in the optical pickup device.

In addition, an apparatus capable of playing a DVD and a CD is available. The apparatus must provide a light source which can output light for DVD and light for CD whose wavelength is different from the wavelength of DVD. The apparatus uses a so-called twin-beam light source which radiates two beams having corresponding different wavelengths to one optical route (for example, see-Japanese Unexamined Patent Publication No 2005-141849). When an unwanted light filtering unit is to be disposed before the twin-beam light source, the unwanted light filtering unit must function for the two wavelengths of DVD and CD.

When the fine structural body 38 of the optical element 32 in Japanese Unexamined Patent Publication No 2006-318568 is studied under the two-wavelength conditions, the aspect ratio must be much higher. The aspect ratio is described below in detail.

US Patent Publication No describes a diffraction device which may be used in an optical pickup. The diffraction device has, on a transparent substrate place, a diffraction pattern composed of periodically alternating array of first and second phase control zones. Each one of the first and second phase control zones is provided with an infinitesimal ruled structure in a pitch of the order of sub-wavelength, i.e., in a pitch smaller than the shortest wavelength of incident light, thereby to control phase shifts to the same angle in a plural number of wave ranges. The infinitesimal ruled structure in the first and second phase control zones are disposed in perpendicularly intersecting relation with each other.

SUMMARY OF INVENTION

In embodiments of the present invention, there is provided an optical pickup device and an optical information processing apparatus using the optical pickup device in which an amount of returning light input to a light source is minimized, a polarization optical element having a low aspect ratio can be obtained, manufacturing cost is decreased, and practicality and mass productivity can be high. In addition, in the embodiments of the present invention, an unwanted light filtering method is provided, and the above characteristics of the optical pickup device can be achieved when a twin-beam light source is used.

To achieve one or more of these and other advantages, according to one aspect of the present invention, there is provided an optical pickup device which is used to record information in a first optical recording medium and/or a second optical recording medium in which different wavelengths are used from each other, to reproduce information recorded in the first optical recording medium and/or in the second optical recording medium, and to delete information recorded in the first optical recording medium and/or in the second optical recording medium. The optical pickup device includes a first light source which outputs light having a wavelength $\lambda 1$, a second light source which outputs light having a wavelength $\lambda 2$ ($> \lambda 1$), a light condensing unit which condenses the light output from the first light source and/or the light output from the second light source on a recording surface to be accessed of the optical recording medium, a light splitting element which splits light returning from the optical recording medium via the light condensing unit, disposed on a light route between the first and second light sources and the light condensing unit, a light receiving element which receives the returning light split by the light splitting element at a predetermined position, and a polarization optical element disposed on a light route between the first and second light sources and the light splitting element. The polarization optical element is formed by arraying a periodic structure having a pitch width that has the wavelength of $\lambda 2$ or more and two adjacent orthogonally-formed sub wavelength concave-convex structures having corresponding pitch widths less than the wavelength $\lambda 1$, and filling factors and groove depths of the two sub wavelength concave-convex structures are determined so that effective refractive indexes of the two sub wavelength concave-convex structures become the same for polarized directions of light output from the first and second light sources and a phase difference between the two sub wavelength concave-convex structures becomes n for light having a polarized direction orthogonal to the polarized direction of the light output from the first and second light sources.

[Effect of Invention]

According to an embodiment of the present invention, in an optical pickup device, a polarization optical element can be obtained in which an amount of light returning to a light source of the optical pickup device from an optical recording medium is minimized. In the polarization filter, the aspect ratio is low and the cost to manufacture the polarization filter is low. In addition, the practicality and the mass productivity of the optical pickup device are high, and the optical pickup device can reduce the amount of unwanted light. Therefore, even if the optical pickup device uses a light source of a twin-beam system having two light sources whose wavelengths are different from each other, the above advantages can be obtained.

BRIEF DESCRIPTION OF DRAWINGS

Features and advantages of the present invention will become more apparent from the following detailed description when read in conjunction with the accompanying drawings, in which:

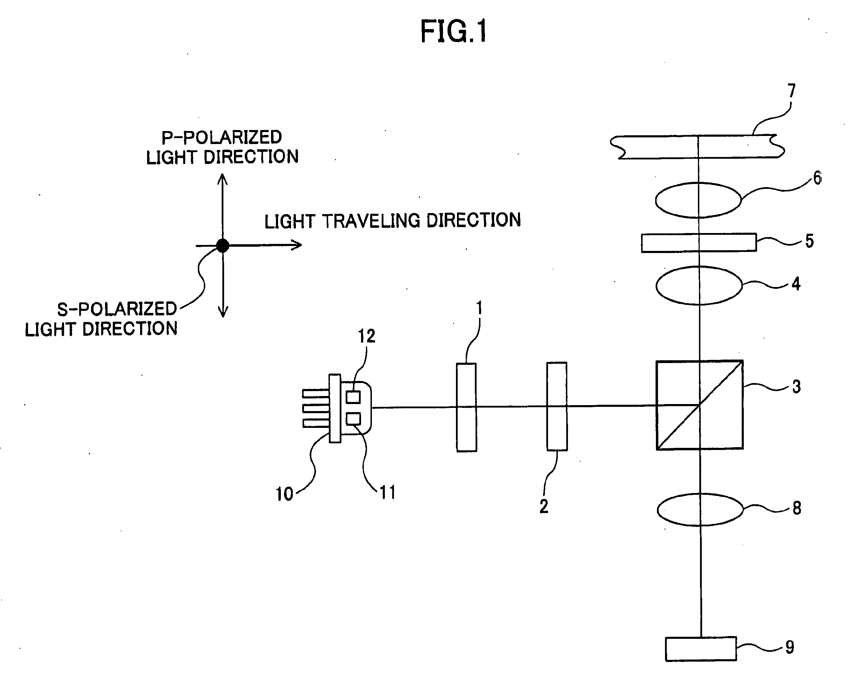

FIG. 1 is a schematic diagram showing an optical pickup device according to a first embodiment of the present invention;

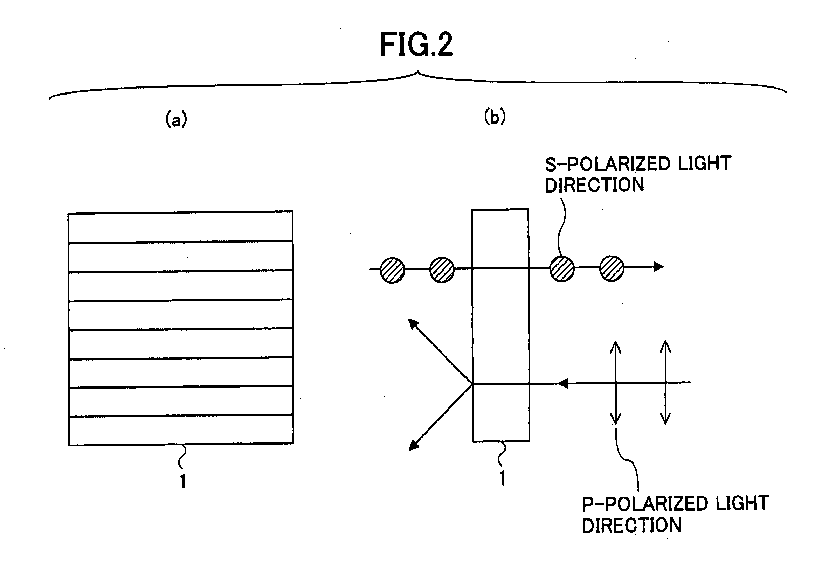

FIG. 2 is a diagram showing a macrostructure of a polarization filter shown in FIG. 1;

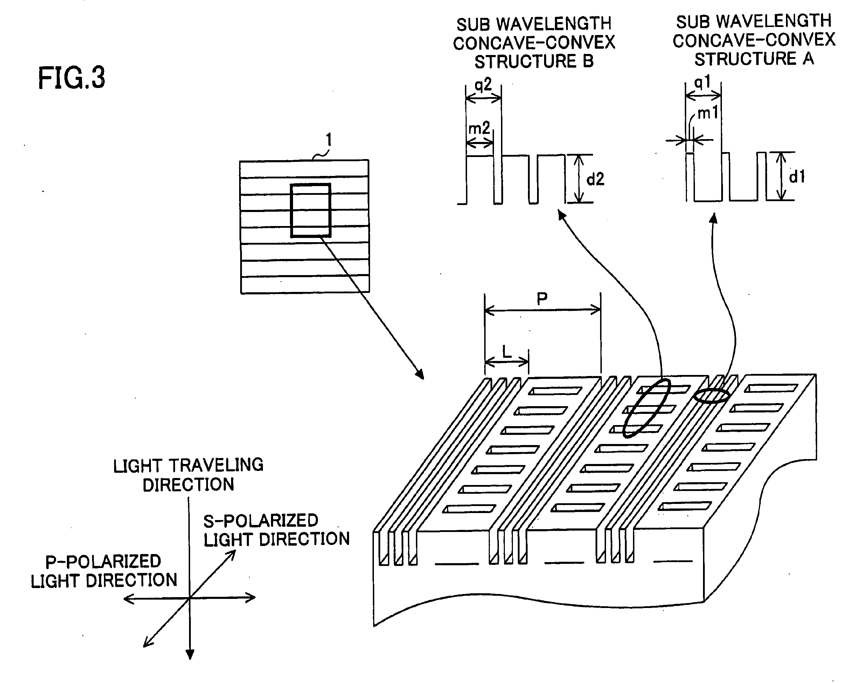

FIG. 3 is an enlarged view of a grating surface formed in the polarization filter shown in FIG. 1;

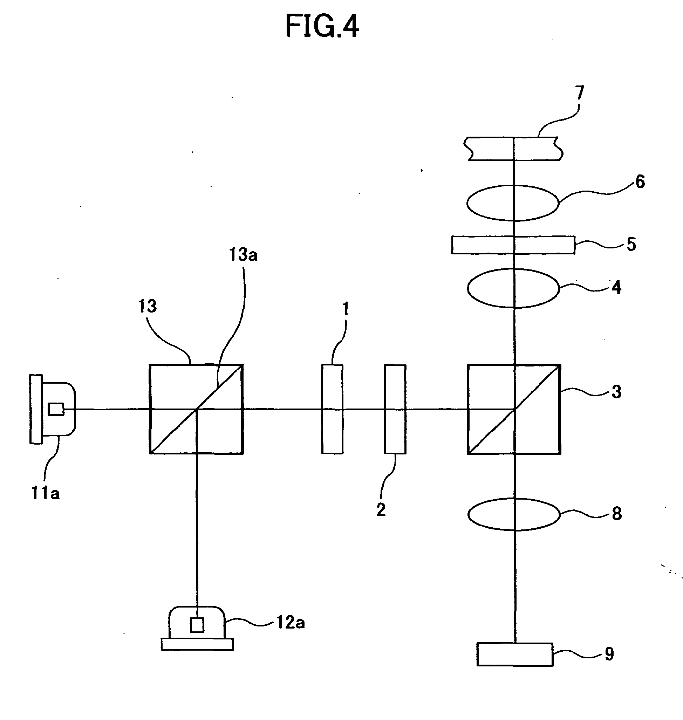

FIG. 4 is a schematic diagram showing another optical pickup device according to a second embodiment of the present invention;

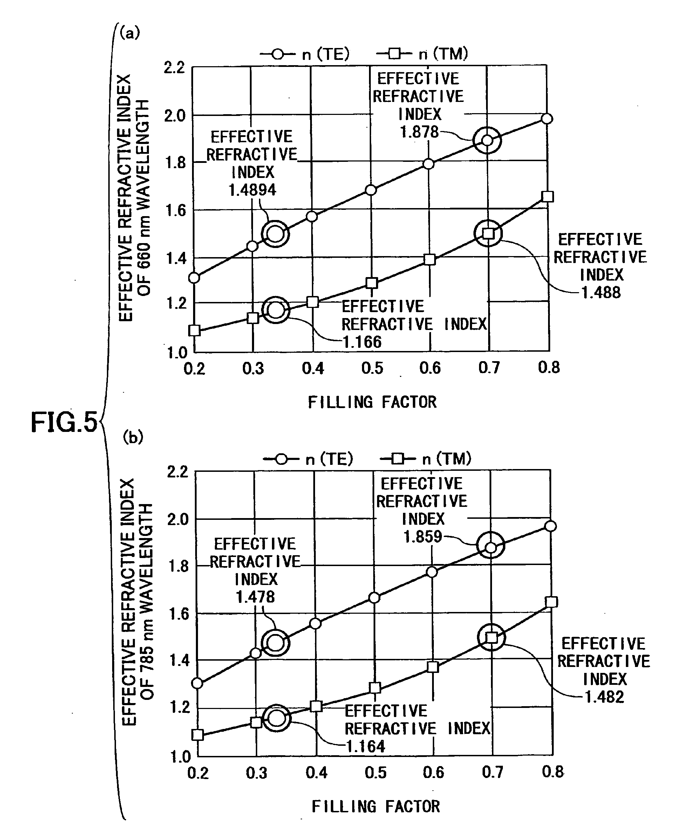

FIG. 5 is a graph showing a relationship between a filling factor and an effective refractive index in TE and TM directions according to the embodiments of the present invention;

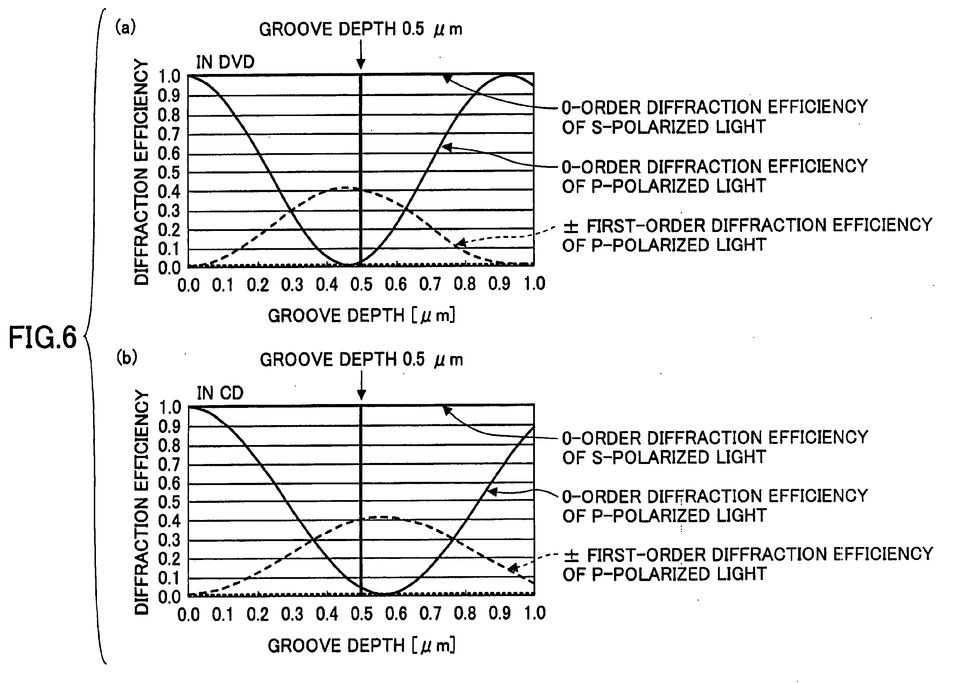

FIG. 6 is a graph showing a relationship between diffraction efficiency and a groove depth according to the embodiments of the present invention;

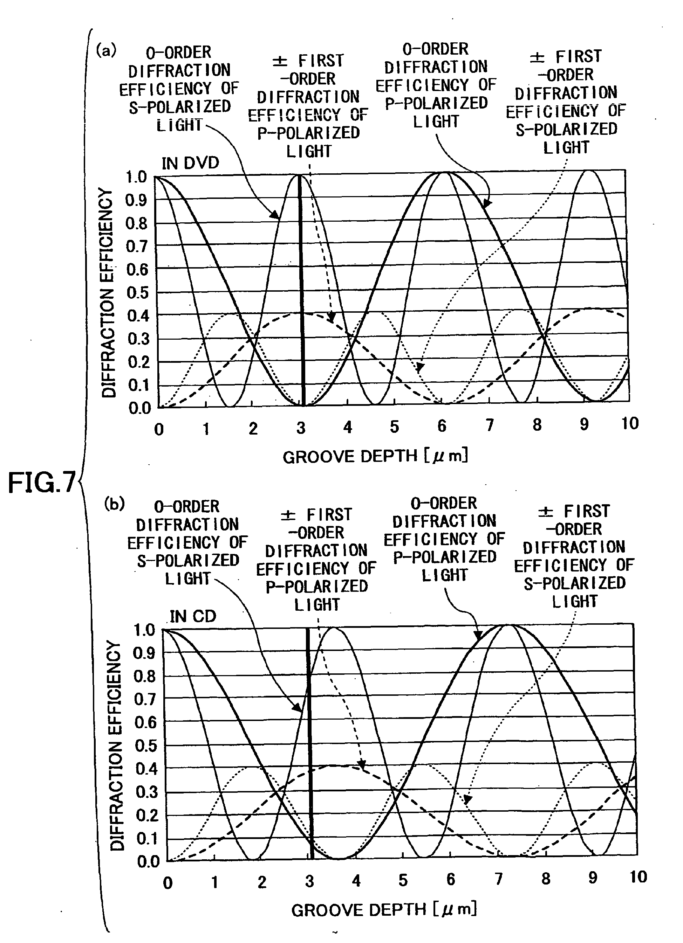

FIG. 7 is a graph showing a relationship between the diffraction efficiency and the groove depth in a conventional polarization filter;

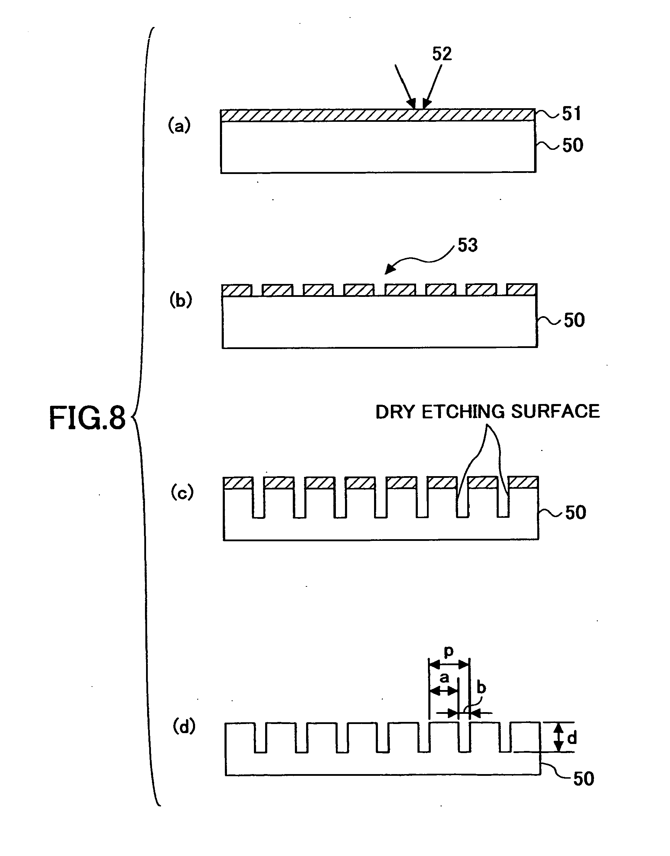

FIG. 8 is a diagram showing processes to manufacture a quartz material die for the polarization filter shown in FIG. 1;

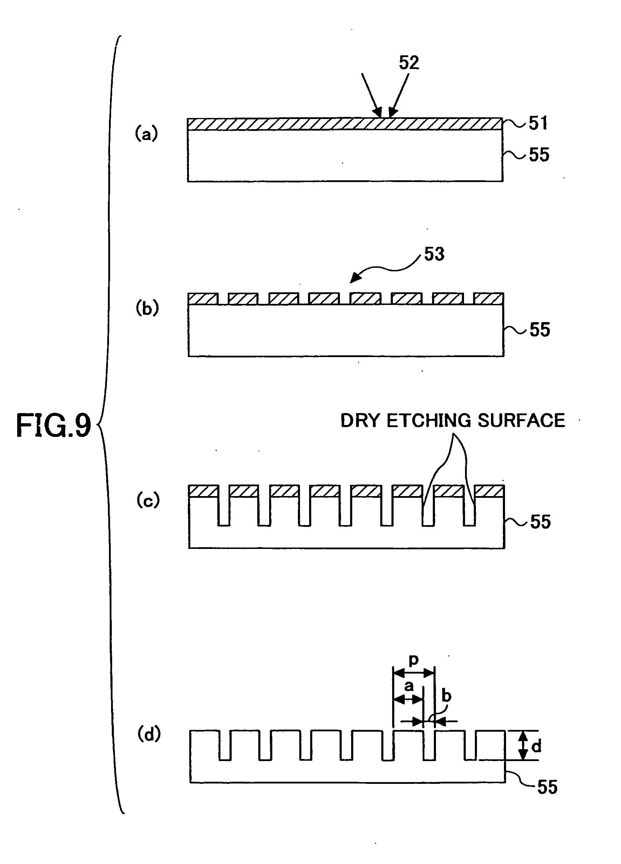

FIG. 9 is a diagram showing processes to manufacture a silicon material die for the polarization filter shown in FIG. 1;

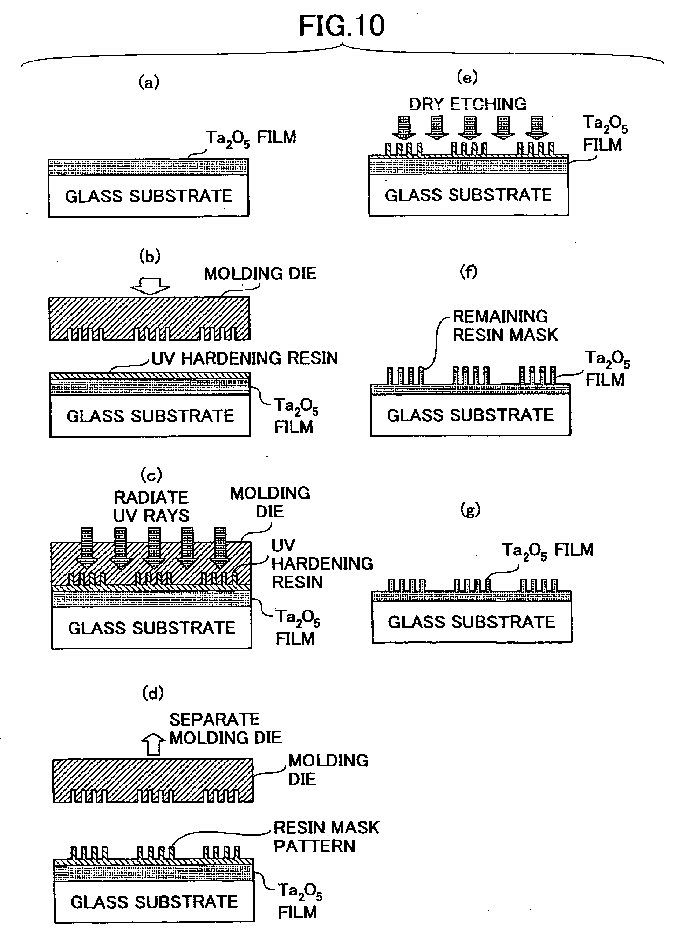

FIG. 10 is a diagram showing first processes to manufacture the polarization filter shown in FIG. 1;

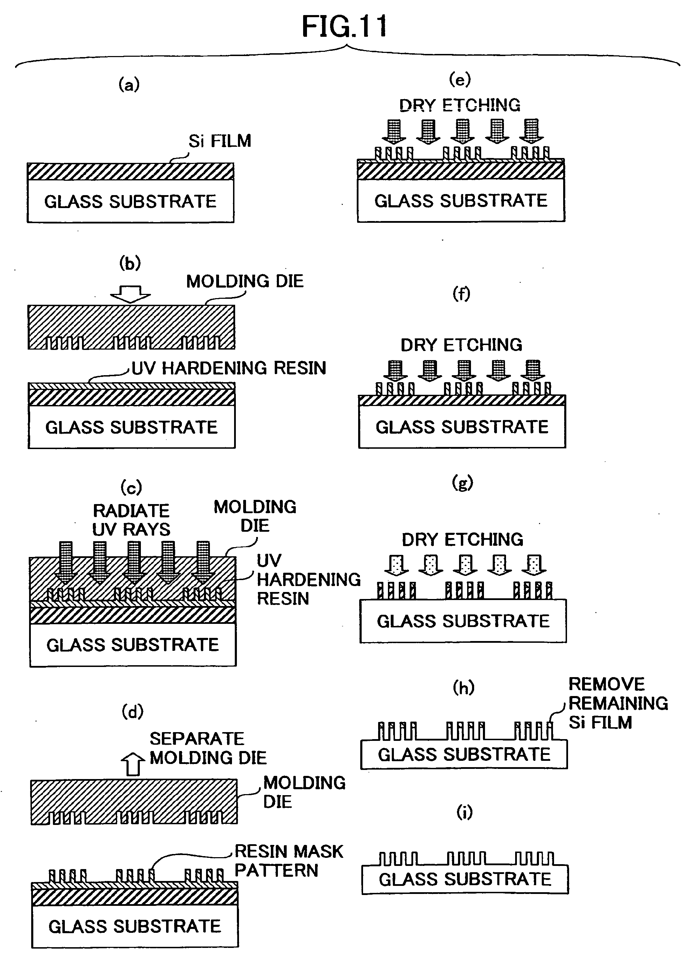

FIG. 11 is a diagram showing second processes to manufacture the polarization filter shown in FIG. 1;

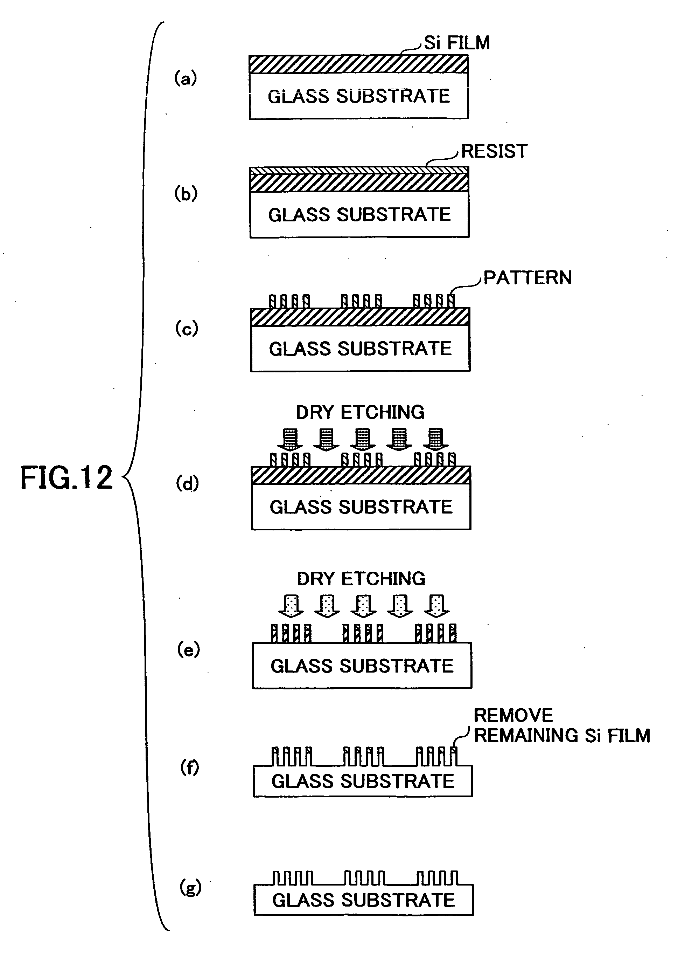

FIG. 12 is a diagram showing third processes to manufacture the polarization filter shown in FIG. 1;

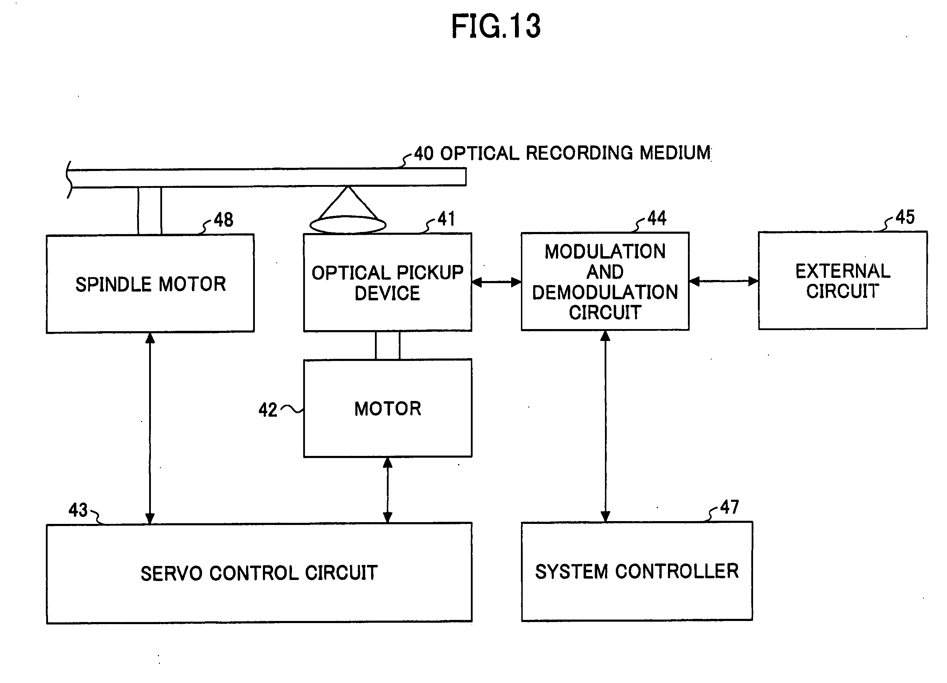

FIG. 13 is a block diagram showing an optical information processing apparatus according to a fourth embodiment of the present invention;

FIG. 14 is a schematic diagram showing a conventional optical pickup device;

FIG. 15 is a cut-away view of a polarization diffraction element shown in FIG. 14;

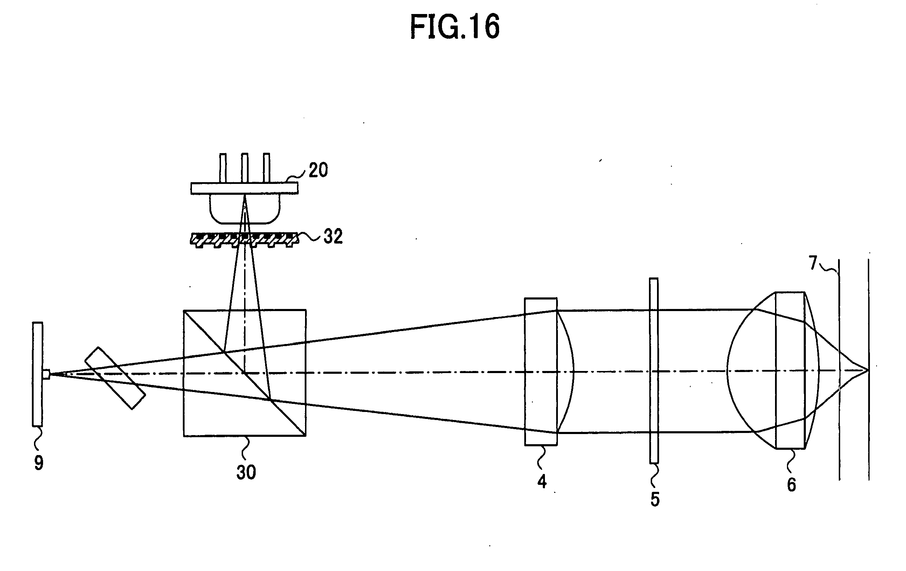

FIG. 16 is a schematic diagram showing another conventional optical pickup device; and

FIG. 17 is a cut-away view of an optical element shown in FIG. 16.

## MODE(S) FOR CARRYING OUT THE INVENTION

Referring to the drawings, embodiments of the present invention are described in detail.

In the embodiments of the present invention, when an element is similar to or the same as that shown in FIGs. 14 and 16, the same reference number as that shown in FIGs. 14 and 16 is used.

FIG. 1 is a schematic diagram showing an optical pickup device according to a first embodiment of the present invention.

The optical pickup device includes a polarization filter 1 (polarization optical element), a diffraction element 2 for three beams, a polarization beam splitter 3, a collimate lens 4, a 1/4 wavelength plate 5, an objective lens 6, an optical recording medium 7, a detection lens 8, a light receiving element 9, a semiconductor laser 10, a DVD light source 11, and a CD light source 12. The semiconductor laser 10 includes the DVD light source 11 and the CD light source 12.

In this, polarized light having a polarization direction orthogonal to the plane of the paper in FIG. 1 is called S-polarized light, and polarized light having a polarization direction parallel to the plane of the paper in FIG. 1 is called P-polarized light.

The polarization filter 1 diffracts the P-polarized light and transmits the S-polarized light as it is.

The diffraction element 2 (for three beams) divides a laser beam output from the semiconductor laser 10 into three beams; a main beam (0-order beam), and sub beams ($\pm$ first-order beams) by using a three-beam method or a DPP (discharge produced plasma) method so that a tracking error signal is detected. With this, a reproduction signal is obtained from a detection signal of the main beam reflected from the optical recording medium 7, and the tracking error signal is obtained by operations of the main beam and the sub beams reflected from the optical recording medium 7.

The polarization beam splitter 3 is a light route switching element which switches light routes between an outputting light route and a returning light route. In the light outputting route, a laser beam output from the semiconductor laser 10 travels toward the optical recording medium 7 via the objective lens 6 and so on. The objective lens 6 focuses the outputting beam on the optical recording medium 7 as a spot. In the returning light route, light reflected from the optical recording medium 7 travels toward the light receiving element 9. That is, the polarization beam splitter 3 is a polarization dependent light route switching device which switches the traveling direction of the input light (beam) so that optical high efficiency request is satisfied.

The collimate lens 4 converts diverging light output from the semiconductor laser 10 into parallel light and functions as a condenser lens for the returning light reflected from the optical recording medium 7 which travels toward the light receiving element 9.

The 1/4 wavelength plate 5 is disposed between the polarization beam splitter 3 (and the collimate lens 4) and the objective lens 6 and changes the polarization of the input light so that a high efficiency request is satisfied in the optical system.

The objective lens 6 is a diffraction lens formed of resin which condenses a light flux on the optical recording medium 7 for DVD and CD. A diffraction structure is formed on the surface of the objective lens 6, and the objective lens 6 can change a light condensing position on the optical recording medium 7 and the number of apertures corresponding to wavelengths of the input light flux. The objective lens 6 condenses a light flux whose wavelength is 660 nm on the optical recording medium 7 for DVD with the number of apertures NA = 0.65, and condenses a light flux whose wavelength is 785 nm on the optical recording medium 7 for CD with the number of apertures NA = 0.50.

The optical recording medium 7 is an optical recording medium for DVD and CD.

The detection lens 8 is an astigmatic lens which generates astigmatism so that a focus error signal is detected by using an astigmatic method.

The light receiving element 9 receives light reflected from the optical recording medium 7 and detects an information signal and/or an error signal from the received light.

The semiconductor laser 10 is a two-wavelength light source unit in which the DVD light source 11 (laser diode) for outputting light having 660 nm wavelength band and the CD light source 12 (laser diode) for outputting light having 785 nm wavelength band are assembled in one package. The semiconductor laser 10 can be a monolithic type laser in which the two-wavelength light source is formed on one semiconductor substrate or a hybrid type laser in which a chip for DVD and a chip for CD are assembled.

In the first embodiment of the present invention, the polarization direction of light output from the CD light source 12 is the same as the polarization direction of light output from the DVD light source 11.

The optical pickup device shown in FIG. 1 outputs light whose wavelength is 785 nm from the CD light source 12 when an information signal from the optical recording medium 7 for CD is reproduced. The output light condenses on the (recording) surface of the optical recording medium 7 for CD as a spot via the polarization filter 1, the diffraction element 2, the polarization beam splitter 3, the collimate lens 4, the 1/4 wavelength plate 5, and the objective lens 6; and returning light reflected from the surface of the optical recording medium 7 for CD condenses on the light receiving element 9 via the polarization beam splitter 3 and so on. The information signal for CD is reproduced by a detection signal at the light receiving element 10.

When an information signal from the optical recording medium 7 for DVD is reproduced, similar to the above, the optical pickup device outputs light whose wavelength is 660 nm from the DVD light source 11. The output light condenses on the surface of the optical recording medium 7 for DVD as a spot via the polarization filter 1, the diffraction element 2, the polarization beam splitter 3, the collimate lens 4, the 1/4 wavelength plate 5, and the objective lens 6; and returning light reflected from the surface of the optical recording medium 7 for DVD condenses on the light receiving element 9 via the polarization beam splitter 3 and so on. The information signal for DVD is reproduced by a detection signal at the light receiving element 9.

Next, referring to FIG. 1, a light path in a DVD system is described. When an information signal is written (recorded) in the optical recoding medium 7 for DVD or an information signal is read from the optical recoding medium 7 for DVD, the DVD light source 11 outputs S-polarized light having the direction orthogonal to the plane of the paper in FIG. 1 as outputting light, and the S-polarized light is input to the polarization filter 1. The polarization filter 1 has a structure which transmits the S-polarized light as it is and diffracts the P-polarized light; therefore, the S-polarized light is transmitted through the polarization filter 1 as it is (dead-band transmission).

The S-polarized light transmitted through the polarization filter 1 is input to the diffraction element 2 (for three beams). The S-polarized light is diffracted and three beams are generated by the diffraction element 2. The three beams are input to the polarization beam splitter 3. The polarization beam splitter 3 reflects the S-polarized light of the three beams and changes the optical route by 90 degrees. The collimate lens 4 causes the S-polarized light to be parallel light and the parallel light is input to the 1/4 wavelength plate 5. The 1/4 wavelength plate 5 changes the linearly polarized light to circularly polarized light and the circularly polarized light is input to the objective lens 6. The objective lens 6 condenses the circularly polarized light (the three beams) on the surface of the optical recording medium 7 (for DVD).

The three beams input on the surface of the optical recording medium 7 are reflected from the surface of the optical recording medium 7 and the reflected three beams travel toward the side of the objective lens 6 as returning light. The main beam of the three beams condensed on the surface of the optical recording medium 7 writes an information signal in the surface of the optical recording medium 7 or reads an information signal from the surface of the optical recording medium 7. The sub beams of the three beams are used to detect a tracking error signal and so on.

The three beams reflected from the (recording) surface of the optical recording medium 7 are input to the objective lens 6 and the objective lens 6 causes the three beams to be parallel light, and the parallel light is input to the 1/4 wavelength plate 5. The 1/4 wavelength plate 5 changes the circularly polarized light to linearly polarized light of P-polarized light, and the linearly polarized light is input to the collimate lens 4. The collimate lens 4 causes the three beams to be convergent light. The P-polarized light is transmitted through the polarization beams splitter 3 and the detection lens 8, and is input to the light receiving element 9. The light receiving element 9 changes the input light to an electric signal.

When the P-polarized light is transmitted through the polarization beam splitter 3, a large amount of the P-polarized light, for example, approximately 95%, is transmitted to the side of the light receiving element 9, and a small amount of the P-polarized light, for example, approximately 5%, is reflected at the polarization beam splitter 3 and travels toward the DVD light source 11.

The returning light reflected by the polarization beam splitter 3 is input to the diffraction element 2 and the diffraction element 2 diffracts the returning light and generates three beams. The returning light input to the polarization filter 1 is diffracted due to the P-polarized light.

With this, the sub beams are diffracted and the main beam is minimized, and the diffracted sub beams and the minimized main beam are output from the polarization filter 1. Since the diffracted beams (light) at the polarization filter 1 are output in a direction separated away from the DVD light source 11, the diffracted beams (light) are not directly input to the DVD light source 11. In this, the polarization filter 1 is disposed so that the returning light is prevented from being input to the DVD light source 11. That is, the polarization filter 1 is disposed at a position where unwanted light is not input to the DVD light source 11.

As a result, the DVD light source 11 can be normally operated. In addition, since the polarization filter 1 is disposed at a predetermined position in the optical pickup device, instability of the optical characteristics of all the optical system of the optical pickup device can be minimized, and an information signal can be written in the optical recording medium 7 and an information signal can be read from the optical recording medium 7.

The polarization filter 1 has the same functions for light from the CD light source 12 as the functions for the DVD light source 11. That is, the polarization filter 1 transmits through the S-polarized light from the CD light source 12 and diffracts P-polarized returning light reflected from the optical recording medium 7.

FIG. 2 is a diagram showing a macrostructure of the polarization filter 1. In FIG. 2, (a) shows a front view, and (b) shows a cut-away side view. The polarization filter 1 includes a grating surface which diffracts P-polarized light and transmits through S-polarized light.

FIG. 3 is an enlarged view of the grating surface formed in the polarization filter 1. In the enlarged view in FIG. 3, a part of the polarization filter 1 is shown. That is, in FIG. 3, a periodic structure having a pitch width P which is the wavelength of light to be input or more, and sub wavelength concave-convex structures A and B having corresponding pitch widths q1 and q2 which are less than the wavelength of the light to be input are shown. The input light is diffracted corresponding to the periodic structure and the sub wavelength concave-convex structures A and B. That is, polarization selectivity is obtained. With this, as shown in FIG. 2 (b), the polarization filter 1 diffracts P-polarized light and transmits S-polarized through the polarization filter 1.

[Second Embodiment]

FIG. 4 is a schematic diagram showing another optical pickup device according to a second embodiment of the present invention.

In the first embodiment of the present invention shown in FIG. 1, the semiconductor laser 10 is used in which the DVD light source 11 and the CD light source 12 are assembled in one unit; that is, the two-wavelength light source unit is used. However, in the second embodiment of the present invention, as the semiconductor laser, each of a semiconductor DVD laser 11a and a semiconductor CD laser 12a is used as an individual package semiconductor laser.

In addition, in the second embodiment of the present invention, a dichroic prism 13 is newly used. The dichroic prism 13 includes a multilayered film 13a, and the multi-layered film 13a transmits light of 660 nm wavelength and reflects light of 785 nm wavelength. That is, the light of 660 nm wavelength and the light of 785 nm wavelength travel toward the side of the optical recording medium 7.

In the above, the optical pickup device processes two different wavelengths. However, the optical pickup device in the embodiments of the present invention can be used in an optical system using one wavelength. In other words, in the second embodiment of the present invention, for example, the semiconductor CD laser 12a and the dichroic prism 13 can be removed.

Next, the polarization filter 1 in the first and second embodiments of the present invention is described in detail. As described in FIG. 2, the polarization filter 1 having the macrostructure includes the grating surface which diffracts P-polarized light and transmits through S-polarized light as it is.

In FIG. 3, the polarization filter 1 has a structure in which the sub wavelength concave-convex structures A and B are added to the periodic structure whose pitch width P is the wavelength or more of the light to be input. The sub wavelength concave-convex structure A has a pitch width less than the input light wavelength by having a groove direction in the S-polarized light direction. In addition, the sub wavelength concave-convex structure B has a pitch width less than the input light wavelength by having a groove direction in the P-polarized light direction.

In FIG. 3, "P" is the pitch width of the periodic structure where pitch width is the wavelength or more formed in the polarization filter 1. "L" is a width where the sub wavelength concave-convex structure A is formed. L/P is called a duty ratio of the polarization filter 1, and is used in calculation of diffraction efficiency (described below).

In addition, "q1" is the pitch width of the sub wavelength concave-convex structure A, "m1" is a width of a convex part of the sub wavelength concave-convex structure A, and "m1/q1" is called a filling factor and is used to calculate an effective refractive index (described below). Further, "q2" is the pitch width of the sub wavelength concave-convex structure B, "m2" is a width of a convex part of the sub wavelength concave-convex structure B, and "m2/q2" is called a filling factor and is used to calculate the effective refractive index. In addition, "d1" is a groove depth of the sub wavelength concave-convex structure A, and "d2" is a groove depth of the sub wavelength concave-convex structure B.

As shown in FIG. 3, the polarization filter 1 is formed of the periodic structure having the pitch width P which is the wavelength or more of light to be input, the sub wavelength concave-convex structure A having the pitch width "q1" which is less than the wavelength, and the sub wavelength concave-convex structure B having the pitch width "q2" which is less than the wavelength. Therefore, the polarization filter 1 establishes the polarization selectivity in which input light is diffracted by the periodic structure having the pitch width P which is the wavelength or more, and the P-polarized light and the S-polarized light are diffracted by the sub wavelength concave-convex structures A and B. With this, as shown in FIG. 2 (b), the polarization filter 1 diffracts P-polarized light and transmits the S-polarized light as it is. That is, dead-band transmission is applied to the S-polarized light.

The sub wavelength concave-convex structures A and B formed on the surface of the polarization filter 1 shows generally-known structural birefringence. In the structural birefringence, when two kinds of media whose refractive indexes are different from each other are arrayed in a stripe shape with a shorter pitch width than the wavelength, a refractive index of a polarized component parallel to the stripe (TE wave) is different from a refractive index of a polarized component orthogonal to the stripe (TM wave), and a birefringent operation is generated. The above refractive index is called the effective refractive index.

Next, a case is studied. In this case, as the two kinds of media whose refractive indexes are different from each other, air and a medium whose refractive index is "n" are assumed, and light having a wavelength two times or more than the pitch width of a sub wavelength concave-convex structure is orthogonally input to the polarization filter 1. At this time, the effective refractive index is obtained from Mathematical Formula (1) when the polarized direction of the input light is parallel to the groove direction of the sub wavelength concave-convex structure (TE direction), and the effective refractive index is obtained from Mathematical Formula (2) when the polarized direction of the input light is orthogonal to the groove direction of the sub wavelength concave-convex structure (TM direction). The effective refractive index in the direction parallel to the groove direction of the sub wavelength concave-convex structure is shown by n(TE) of Mathematical Formula (1), and the effective refractive index in the direction orthogonal to the groove direction of the sub wavelength concave-convex structure is shown by n (TM) of Mathematical Formula (2). In addition, "t" shows the filling factor.

[Mathematical Formula (1)]

$$n(TE) = \sqrt{t \times n^2 + (1-t)} \cdots (1)$$

[Mathematical Formula (2)]

$$n(TM) = \sqrt{\frac{t}{n^2} + (1-t)} \cdots (2)$$

FIG. 5 is a graph showing a relationship between the filling factor and the effective refractive index in the TE and TM directions. In FIG. 5(a), calculated results of the effective refractive indexes are shown in the TE and TM directions when a refractive index n(DVD) = 2.147 of a wavelength 660 nm of $Ta_2O_5$ is used. In FIG. 5(b), calculated results of the effective refractive indexes are shown in the TE and TM directions when a refractive index n(CD) = 2.124 of a wavelength 785 nm of $Ta_2O_5$ is used.

A filling factor "t1" of the sub wavelength concave-convex structure A is obtained from Mathematical Formula (3), and a filling factor "t2" of the sub wavelength concave-convex structure B is obtained from Mathematical Formula (4).

[Mathematical Formula (3)]

$$t1 = m1/q1 \cdots (3)$$

[Mathematical Formula (4)]

$$t2 = m2/q2 \cdots (4)$$

Therefore, the effective refractive index n(TE, DVDA) of the sub wavelength concave-convex structure A in the TE direction in DVD is obtained from Mathematical Formula (5), the effective refractive index n(TM, DVDA) of the sub wavelength concave-convex structure A in the TM direction in DVD is obtained from Mathematical Formula (6), the effective refractive index n(TE, DVDB) of the sub wavelength concave-convex structure B in the TE direction in DVD is obtained from Mathematical Formula (7), and the effective refractive index n(TM, DVDB) of the sub wavelength concave-convex structure B in the TM direction in DVD is obtained from Mathematical Formula (8).

In addition, the effective refractive index n(TE, CDA) of the sub wavelength concave-convex structure A in the TE direction in CD is obtained from Mathematical Formula (9), the effective refractive index n(TM, CDA) of the sub wavelength concave-convex structure A in the TM direction in CD is obtained from Mathematical Formula (10), the effective refractive index n(TE, CDB) of the sub wavelength concave-convex structure B in the TE direction in CD is obtained from Mathematical Formula (11), and the effective refractive index n(TM, CDB) of the sub wavelength concave-convex structure B in the TM direction in CD is obtained from Mathematical Formula (12).
[Mathematical Formula (5)]

$$n(TE, DVDA) = \sqrt{t1 \times n(DVD)^2 + (1 - t1)} \cdots (5)$$

[Mathematical Formula (6)]

$$n(TM, DVDA) = \sqrt{\frac{t1}{n(DVD)^2} + (1 - t1)} \cdots (6)$$

[Mathematical Formula (7)]

$$n(TE, DVDB) = \sqrt{t2 \times n(DVD)^2 + (1 - t2)} \cdots (7)$$

[Mathematical Formula (8)]

$$n(TM, DVDB) = \sqrt{\frac{t2}{n(DVD)^2} + (1 - t2)} \cdots (8)$$

[Mathematical Formula (9)]

$$n(TE, CDA) = \sqrt{t1 \times n(CD)^2 + (1 - t1)} \cdots (9)$$

[Mathematical Formula (10)]

$$n(TM, CDA) = \sqrt{\frac{t1}{n(CD)^2} + (1 - t1)} \cdots (10)$$

[Mathematical Formula (11)]

$$n(TE, CDB) = \sqrt{t2 \times n(CD)^2 + (1 - t2)} \cdots (11)$$

[Mathematical Formula (12)]

$$n(TM, CDB) = \sqrt{\frac{t2}{n(CD)^2} + (1 - t2)} \cdots (12)$$

In addition, a phase difference ψ(DVD, P-polarized light) between the sub wavelength concave-convex structures A and B when P-polarized light is input in DVD is obtained from Mathematical Formula (13), a phase difference ψ (DVD, S-polarized light) between the sub wavelength concave-convex structures A and B when S-polarized light is input in DVD is obtained from Mathematical Formula (14), a phase difference ψ(CD, P-polarized light) between the sub wavelength concave-convex structures A and B when P-polarized light is input in CD is obtained from Mathematical Formula (15), and a phase difference ψ(CD, S-polarized light) between the sub wavelength concave-convex structures A and B when S-polarized light is input in CD is obtained from Mathematical Formula (16).

[Mathematical Formula (13)]

$$\psi(\text{DVD, P-polarized light}) = |2\pi/660 \text{ nm} \times (n(\text{TM, DVDA}) \times d1 - n(\text{TE, DVDB}) \times d2)| \cdots (13)$$

[Mathematical Formula (14)]

$$\psi(\text{DVD, S-polarized light}) = |2\pi/660 \text{ nm} \times (n(\text{TE, DVDA}) \times d1 - n(\text{TM, DVDB}) \times d2)| \cdots (14)$$

[Mathematical Formula (15)]

$$\psi(\text{CD, P-polarized light}) = |2\pi/785 \text{ nm} \times (n(\text{TM, CDA}) \times d1 - n(\text{TE, CDB}) \times d2)| \cdots (15)$$

[Mathematical Formula (16)]

$$\psi(\text{CD, S-polarized light}) = |2\pi/785 \text{ nm} \times (n(\text{TE, CDA}) \times d1 - n(\text{TM, CDB}) \times d2)| \cdots (16)$$

As described above, "d1" is the groove depth of the sub wavelength concave-convex structure A and "d2" is the groove depth of the sub wavelength concave-convex structure B. Therefore, when the filling factors "t1" and "t2", and the groove depths "d1" and "d2" are suitably selected, the phase difference can be arbitrarily adjusted,

The pitch width P having the wavelength or more, which is a diffraction function of the polarization filter 1, is determined to be greater than 785 nm of the CD light source wavelength, and the duty ratio L/P of the diffraction grating is determined to be 0.5.

In addition, the pitch width q1 and q2 of the corresponding sub wavelength concave-convex structures A and B are determined to be smaller than 660 nm of the DVD light source wavelength. Preferably, each of the pitch widths q1 and q2 of the corresponding sub wavelength concave-convex structures A and B is determined to be 330 nm or less (half wavelength of 660 nm).

As described above, the polarization filter 1 includes the grating surface that diffracts the P-polarized light and transmits the S-polarized light as it is without diffracting. When the S-polarized light is transmitted through (the dead-band transmission is applied to the S-polarized light), the phase difference must be 0 or 2mπ (m is an integer).

Next, a specific example is described. In the specific example, a medium is used in which the refractive index "n" = 2.147, the filling factor "t1" of the sub wavelength concave-convex structure A is determined to be 0.337, and the filling factor "t2" of the sub wavelength concave-convex structure B is determined to be 0.700.

In the specific example, the effective refractive indexes are as follows.

The effective refractive index of the sub wavelength concave-convex structure A in the TE direction "n (TE, DVDA)" = 1.489, the effective refractive index of the sub wavelength concave-convex structure A in the TM direction "n (TM, DVDA)" = 1.166, the effective refractive index of the sub wavelength concave-convex structure B in the TE direction "n (TE, DVDB)" = 1.878, and the effective refractive index of the sub wavelength concave-convex structure B in the TM direction "n (TM, DVDB)" = 1.488.

In addition, in the sub wavelength concave-convex structures A and B, when the groove depths "d1" and "d2" are determined to be the same groove depth "d", the phase difference $\psi$(DVD, P-polarized light) between the sub wavelength concave-convex structures A and B when P-polarized light is input in DVD = (2nd/660 nm) $\times$ (1.878 - 1.166), and the phase difference $\psi$ (DVD, S-polarized light) between the sub wavelength concave-convex structures A and B when S-polarized light is input in DVD $\approx$ 0.

FIG. 6 is a graph showing a relationship between the diffraction efficiency and the groove depth. In FIG. 6, the vertical axis shows the diffraction efficiency and the horizontal axis shows the groove depth "d" of the sub wavelength concave-convex structures A and B. In addition, in FIG. 6, (a) shows a case where light having a wavelength of 660 nm is input to the polarization filter 1, and (b) shows a case where light having a wavelength of 785 nm is input to the polarization filter 1.

In FIG. 6(a), since the S-polarized light is transmitted through the polarization filter 1 as it is, 0-order light is 1.0 and $\pm$ first-order diffraction light is not generated.

On the other hand, the P-polarized light is diffracted, since the amount of the 0-order P-polarized light is desired to be low as much as possible, the groove depth is selected to meet this. When considered together with a case in CD, the groove depth "d" is preferable to be 0.50 $\mu$m.

As described above, the polarization filter 1 includes the grating surface that diffracts the P-polarized light and transmits the S-polarized light as it is without diffracting. When the S-polarized light is transmitted through (the dead-band transmission is applied to the S-polarized light), the phase difference must be 0 or 2mn (m is an integer).

Next, a specific example in CD shown in FIG. 6(b) is described. In the specific example, a medium is used in which the refractive index "n" = 2.124, the filling factor "t1" of the sub wavelength concave-convex structure A is determined to be 0.337, and the filling factor "t2" of the sub wavelength concave-convex structure B is determined to be 0.700.

In the specific example, the effective refractive indexes are as follows.

The effective refractive index of the sub wavelength concave-convex structure A in the TE direction "n (TE, CDA)" = 1.478, the effective refractive index of the sub wavelength concave-convex structure A in the TM direction "n (TM, CDA)" = 1.164, the effective refractive index of the sub wavelength concave-convex structure B in the TE direction "n (TE, CDB)" = 1.859, and the effective refractive index of the sub wavelength concave-convex structure B in the TM direction "n (TM, CDB)" = 1.482.

In addition, in the sub wavelength concave-convex structures A and B, when the groove depths "d1" and "d2" are determined to be the same groove depth "d", the phase difference $\psi$ (CD, P-polarized light) between the sub wavelength concave-convex structures A and B when P-polarized light is input in CD $\approx$ 0, and the phase difference $\psi$ (CD, S-polarized light) between the sub wavelength concave-convex structures A and B when S-polarized light is input in CD = (2nd/785 nm) $\times$ (1.859 - 1.164).

In FIG. 6(b), since the S-polarized light is transmitted through the polarization filter 1 as it is, 0-order light is 1.0 and $\pm$ first-order diffraction light is not generated.

On the other hand, the P-polarized light is diffracted, since the amount of the 0-order P-polarized light is desired to be low as much as possible, the groove depth is selected to meet this. When considered together with a case in DVD, the groove depth "d" is preferable to be 0.50 $\mu$m.

As described above, according to the embodiments of the present invention, the polarization filter 1 includes the sub wavelength concave-convex structures A and B orthogonal to each other. When the embodiments of the present invention are applied to Patent Document 2, one of the P-polarized light and the S-polarized light can be completely transmitted through the polarization filter 1; that is, the dead-band transmission can be applied.

FIG. 7 is a graph showing a relationship between diffraction efficiency and a groove depth in a conventional polarization filter. Graphs in FIG. 7 are calculated based on the contents described in paragraphs 0058 through 0089 in Patent Document 2. In FIG. 7, (a) shows a case of DVD, and (b) shows a case of CD.

As shown in FIG. 7(a) in DVD, the diffraction efficiency shows a sine curve for any of the P-polarized light and the S-polarized light. That is, when the groove depth is slightly changed, the diffraction efficiency of the returning light is lowered and the transmission factor of the outputting light to the optical recording medium is also lowered.

In addition, as shown in FIG. 7(b) in CD in which light of 785 nm wavelength is transmitted, the sine curves are more largely changed than those shown in FIG. 7 (a). The conventional polarization filter does not work for the light of 785 nm wavelength.

As shown in FIG. 7(a) and 7(b), when the groove depth is 10 $\mu$m or less, the conventional polarization filter does not function as a two-wavelength polarization filter, and manufacturing the two-wavelength polarization filter is very difficult in Patent Document 2.

In the embodiments of the present invention, similar to Patent Document 2, when the pitch width of the sub wavelength concave-convex structures A and B is assumed to be approximately 0.20 $\mu$m, the groove depth is approximately two times 0.236 $\mu$m. On the other hand, in Patent Document 2, the aspect ratio is 30 times or more, it is understandable that manufacturing the polarization filter is very difficult. In such a high aspect ratio, quality assurance must be required so that the polarization filter is not defective when the polarization filter is assembled in the optical pickup device.

[Third Embodiment]

Next, in a third embodiment of the present invention, manufacturing processes of the polarization filter 1 are described. Before manufacturing the polarization filter 1, manufacturing processes of a die for the polarization filter 1 are described.

FIG. 8 is a diagram showing processes to manufacture a quartz material die for the polarization filter 1. In FIG. 8, a part of the die for polarization filter 1 is shown.

In FIG. 8(a), a resist 51 is applied onto a surface of a quartz material 50 (substrate) with a predetermined thickness so that electron beams 52 are able to draw a pattern in the resist 51, and the resist 51 and the quartz material 50 are pre-baked. The electron beams 52 draw a pattern for the polarization filter 1 on the resist 51 with a pitch width and a line width by using a predetermined program.

In FIG. 8(b), a developing process and a rinsing (cleaning) process are applied to the resist 51. With this, a sub wavelength concave-convex structure 53 is formed on the quartz material 50. The quartz material 50 is exposed at groove bottoms of the sub wavelength concave-convex structure 53.

In FIG. 8(c), dry etching is applied onto the exposed quartz material 50 with the pattern of the resist 51 of the sub concave-convex structure 53 as a mask. In the dry etching, a CF4 (tetrafluoromethan) gas or a CF3 (trifluoromethyl) gas is used in an RIE (reactive ion etching) apparatus, an NLD (magnetic neutral loop discharge) apparatus, or a TCP (transformer coupled plasma) apparatus. The dry etching is progressed in the direction orthogonal to the surface of the quartz material 50 when a bias voltage is applied to the quartz material 50.

In FIG. 8(d), the resist 51 is removed. The resist 51 can be removed in oxygen gas plasma by introducing an oxygen gas into the dry etching apparatus. Alternatively, the quartz material 50 after being applied with the dry etching is taken out of the dry etching apparatus, and the resist 51 is removed by cleaning with the use of CAROS (mixed liquid of sulfuric acid and hydrogen peroxide). With this, the quartz material die for the polarization filter 1 is manufactured.

In FIG. 8(d), "p" is a pitch width, "a" is a land width, "b" is a groove width, and "d" is a groove depth.

Next, manufacturing processes of another die for the polarization filter 1 are described.

FIG. 9 is a diagram showing processes to manufacture a silicon material die for the polarization filter 1. In FIG. 9, a part of the die for the polarization filter 1 is shown.

In FIG. 9(a), a resist 51 is applied onto a surface of a silicon material 55 (substrate) with a predetermined thickness so that electron beams 52 are able to draw a pattern in the resist 51, and the resist 51 and the silicon material 55 are pre-baked. The electron beams 52 draw a pattern for the polarization filter 1 on the resist 51 with a pitch width and a line width by using a predetermined program.

In FIG. 9(b), a developing process and a rinsing (cleaning) process are applied to the resist 51. With this, a sub wavelength concave-convex structure 53 is formed. The silicon material 55 is exposed at groove bottoms of the sub wavelength concave-convex structure 53.

In FIG. 9(c), alkali wet etching is applied onto the exposed silicon material 55 by using a KOH (potassium hydrate) solution with the pattern of the resist 51 as a mask. The silicon material 55 is etched in the depth direction with wall surfaces of the silicon material 55 as a guide while maintaining the groove width. Alternatively, a dry etching using a Bosch process can be used.

In FIG. 9(d), the resist 51 is removed. With this, the silicon material die for the polarization filter 1 is manufactured.

In FIG. 9(d), "p" is a pitch width, "a" is a land width, "b" is a groove width, and "d" is a groove depth.

The quartz material die and the silicon material die are called the die for the polarization filter 1.

Next, the manufacturing processes of a polarization filter are described.

FIG. 10 is a diagram showing first processes to manufacture the polarization filter 1. In FIG. 10, a part of the polarization filter 1 is shown.

In FIG. 10, a $Ta_2O_5$ (tantalum pentoxide) film is formed on a glass substrate, and the polarization filter 1 is formed in the $Ta_2O_5$ film.

In FIG. 10 (a), the $Ta_2O_5$ film is formed on a surface of the glass substrate by using a sputtering method under the following conditions.

In the conditions, the substrate temperature is 70 to 100 °C, the pressure at forming film is 5 to $8 \times 10^{-4}$ Torr, the film forming speed is 0.7 to 1.0 Å/sec, and the RF power is 300 to 500 W.

In FIG. 10(b), a UV hardening resin is applied onto the $Ta_2O_5$ film, and a molding die pushes the UV hardening resin from above. As the molding die, any one of the quartz material die and the silicon material die can be used. However, in nanoimprint for forming a fine structure, the quartz material die having a translucent property is suitable. As the UV hardening resin, GRNDIC RC8790 of DIC Corp. is used.

In FIG. 10(c), UV (ultraviolet) rays are radiated from the back surface of the molding die, and the UV hardening resin is hardened. When the silicon material die is used as the molding die, the UV rays are radiated from the side of the glass substrate.

In FIG. 10(d), the molding die is separated from the UV hardening resin. With this, a fine structure having a resin mask pattern with convex parts is formed on the glass substrate. In FIG. 10(e), dry etching is applied to the UV hardening resin so that the $Ta_2O_5$ film is exposed at the bottom of the resin mask pattern.

The dry etching is applied under the following conditions.

In the conditions, the gas is oxygen ($O_2$) gas, the gas flowing amount is 20 sccm, the pressure is 0.4 Pa, the resin etching speed is 30 nm/sec, the upper bias power is 1 kW, and the lower bias power is 60 W.

In FIG. 10(f), a dry etching is applied to the $Ta_2O_5$ film so that grooves of the $Ta_2O_5$ film become a predetermined depth under the following conditions.

In the conditions, the.gases are CHF3 (trifluoromethan) gas and Ar (argon) gas, the gas flowing amounts are 5 sccm for Ar and 20 sccm for CHF3, the pressure is 0.3 Pa, the $Ta_2O_5$ film etching speed is 8 nm/sec, the upper bias power is 1 kW, and the lower bias power is 400 W.

In FIG. 10(g), the remaining resin mask is removed by dry etching in an oxygen gas (plasma). With this, the $Ta_2O_5$ film on the glass substrate is the polarization filter 1.

Next, second manufacturing processes of the polarization filter 1 are described.

FIG. 11 is a diagram showing second processes to manufacture the polarization filter 1. In FIG. 11, a part of the polarization filter 1 is shown.

In FIG. 11, the polarization filter 1 is formed on a glass substrate by using a silicon film and a molding die.

In FIG. 11 (a), a Si (silicon) film is formed on a glass substrate by using a sputtering method under the following conditions.

In the conditions, the substrate temperature is 70 to 100 °C, the pressure at forming film is 7 to $8 \times 10^{-4}$ Torr, the film forming speed is 0.5 to 1.0 Å/sec, and the RF power is 100 to 200 W.

In FIG. 11(b), a UV hardening resin is applied onto the Si film, and a molding die pushes the UV hardening resin from above. As the molding die, any one of the quartz material die and the silicon material die can be used. However, in nanoimprint for forming a fine structure, the quartz material die having a translucent property is suitable. As the UV hardening resin, GRNDIC RC8790 of DIC Corp. is used.

In FIG. 11(c), UV (ultraviolet) rays are radiated from the back surface of the molding die, and the UV hardening resin is hardened. When the silicon material die is used as the molding die, the UV rays are radiated from the side of the glass substrate.

In FIG. 11(d), the molding die is separated from the UV hardening resin. With this, a fine structure having a resin mask pattern with convex parts is formed on the glass substrate.

In FIG. 11(e), dry etching is applied to the UV hardening resin so that the Si film is exposed at the bottom of the resin mask pattern. The dry etching is applied under the following conditions.

In the conditions, the gas is an oxygen ($O_2$) gas, the gas flowing amount is 20 sccm, the pressure is 0.4 Pa, the resin etching speed is 30 nm/sec, the upper bias power is 1 kW, and the lower bias power is 60 W.

In FIG. 11(f), a dry etching is applied to the UV hardening resin and the Si film so that the glass substrate is exposed at the bottom of the Si film under the following conditions.

In the conditions, the gases are an SF6 (sulfur hexafluoride) gas and a CHF3 gas, the gas flowing amounts are 20 sccm for SF6 and 5 sccm for CHF3, the pressure is 0.3 Pa, the resin etching speed is 5 nm/sec, the Si film etching speed is 30 nm/sec, the upper bias power is 1 kW, and the lower bias power is 50 W.

In FIG. 11(g), dry etching is applied to the glass substrate so that a glass groove becomes a predetermined depth under the following conditions.

In the conditions, the gases are a CHF3 gas and an Ar gas, the gas flowing amounts are 5 sccm for Ar and 20 sccm for CHF3, the pressure is 0.3 Pa, the Si film etching speed is 4 nm/sec, the glass substrate etching speed is 12 nm/sec, the upper bias power is 1 kW, and the lower bias power is 400 W.

In FIG. 11(h), the remaining Si (mask) film on the top of the glass substrate is removed by using an alkali KOH solution.

With this, as shown in FIG. 11(i), the polarization filter 1 is formed. That is, one side of the glass substrate is the polarization filter 1.

Next, third manufacturing processes of the polarization filter 1 are described.

FIG. 12 is a diagram showing third processes to manufacture the polarization filter 1. In FIG. 12, a part of the polarization filter 1 is shown.

In FIG. 12, the polarization filter 1 is formed without using a molding die.

In FIG. 12 (a), a Si (silicon) film is formed on a glass substrate by using a sputtering method under the following conditions.

In the conditions, the substrate temperature is 70 to 100 °C, the pressure at forming film is 7 to $8 \times 10^{-4}$ Torr,

the Si film forming speed is 0.5 to 1.0 Å/sec, and the RF power is 100 to 200 W.

In FIG. 12(b), a resist for electron beams is applied onto the Si film.

In FIG. 12(c), a pattern is formed on the resist by using a high-accurate fine-width exposing apparatus, for example, an i-line stepper. After applying a developing process to the pattern, a part of the resist is removed based on the pattern, and a part of the Si film is exposed. The remaining resist becomes a mask pattern for a latter etching process.

In FIG. 12(d), dry etching is applied onto the Si film so that a part of the glass substrate is exposed by using the following conditions.

In the conditions, the gases are an SF6 gas and a CHF3 gas, the gas flowing amounts are 20 sccm for SF6 and 5 sccm for CHF3, the pressure is 0.4 Pa, the Si film etching speed is 30 nm/sec, the upper bias power is 1 kW, and the lower bias power is 50 W.

In FIG. 12 (e), dry etching is applied onto the glass substrate so that the groove depth of the glass substrate becomes a predetermined depth under the following conditions.

In the conditions, the gases are a CHF3 gas and an Ar gas, the gas flowing amounts are 5 sccm for Ar and 20 sccm for CHF3, the pressure is 0.3 Pa, the glass substrate etching speed is 12 nm/sec, the upper bias power is 1 kW, and the lower bias power is 400 W.

In FIG. 12(f), the remaining Si film on the top of the glass substrate is removed by using an alkali KOH solution.

With this, as shown in FIG. 12(g), the polarization filter 1 is formed. That is, a part of the glass substrate is the polarization filter 1.

[Fourth Embodiment]

FIG. 13 is a block diagram showing an optical information processing apparatus according to a fourth embodiment of the present invention. As shown in FIG. 13, the optical information processing apparatus includes an optical pickup device 41 and writes (records) an information signal (information) in an optical recording medium 40 and reads an information signal (information) from the optical recording medium 40. The optical pickup device 41 corresponds to the optical pickup device described in the first and second embodiments of the present invention, and the optical recording medium 40 corresponds to the optical recording medium 7 in the first and second embodiments of the present invention. The optical pickup device 41 is used when the optical information processing apparatus records the information signal in the optical recording medium 40 and reproduces the information signal from the optical recording medium 40.

In addition, as shown in FIG. 13, the optical information processing apparatus further includes a spindle motor 48 which rotates the optical recording medium 40, a motor 42 which moves the optical pickup device 41 in the radius direction of the optical recording medium 40, a modulation and demodulation circuit 44 which modulates predetermined signals and demodulates modulated signals, a servo control circuit 43 which performs servo control of the optical pickup device 41 and so on, and a system controller 47 which controls total operations of the optical information processing apparatus.

The spindle motor 48 is rotated at a predetermined speed under control of the servo control circuit 43. That is, the optical recording medium 40 is held at a driving shaft of the spindle motor 48, and is rotated at the predetermined speed by the spindle motor 48 which is controlled by the servo control circuit 43.

When the optical information processing apparatus writes an information signal in the optical recording medium 40 or reads an information signal from the optical recording medium 40, the optical pickup device 41 radiates a laser beam (light) on the optical recording medium 40 being rotated, and detects light returning from the optical recording medium 40. The optical pickup device 41 is connected to the modulation and demodulation circuit 44, and the modulation and demodulation circuit 44 is connected to an external circuit 45.

When an information signal is recorded in the optical recording medium 40, a signal input from the external circuit 45 is modulated at the modulation and demodulation circuit 44, and the modulated signal is input to the optical pickup device 41. The optical pickup device 41 radiates a laser beam whose light intensity is modulated on the optical recording medium 40 based on the signal input from the modulation and demodulation circuit 44.

When an information signal in the optical recording medium 40 is reproduced, the optical pickup device 41 radiates a laser beam having predetermined intensity on the optical recording medium 40 being rotated, a reproduction signal is generated from light returning from the optical recording medium 40, and the reproduction signal is input to the modulation and demodulation circuit 44.

The optical pickup device 41 is connected to the servo control circuit 43. When an information signal is recorded (written) in the optical recording medium 40 or an information signal in the optical recording medium 40 is reproduced, the optical pickup device 41 generates a focus servo signal and a tracking servo signal from light returning from the optical recording medium 40, and inputs the generated servo signals to the servo control circuit 43.

The modulation and demodulation circuit 44 is connected to the system controller 47 and the external circuit 45. When an information signal is written (recorded) in the optical recording medium 40, the modulation and demodulation circuit 44 receives an information signal to be recorded in the optical recording medium 40 from the external circuit 45 under control of the system controller 47, and modulates the received signal. The modulated signal is input to the optical pickup device 41.

In addition, when an information signal in the optical recording medium 40 is reproduced, the modulation and demodulation circuit 44 receives an information signal to be reproduced in the optical recording medium 40 from the optical pickup device 41 under control of the system controller 47, and demodulates the received signal. The demodulated signal is input to the external circuit 45.

The motor 42 moves the optical pickup device 41 to a predetermined position in the radius direction of the optical recording medium 40 when an information signal is recorded in the optical recording medium 40 or an information signal in the optical recording medium 40 is reproduced. The motor is driven based on a control signal from the servo control circuit 43. That is, the motor 42 is connected to the servo control circuit 43 and is controlled by the servo control circuit 43.

The servo control circuit 43 controls the motor 42 under control of the system controller 47 so that the optical pickup device 41 moves to a predetermined position facing the optical recording medium 40. In addition, the servo control circuit 43 is connected to the spindle motor 48, and controls the operations of the spindle motor 48 under control of the system controller 47. That is, when an information signal is recorded in the optical recording medium 40 or an information signal in the optical recording medium 40 is reproduced, the servo control circuit 43 controls the spindle motor 48 so that the optical recording medium 40 is rotated at a predetermined speed.

In the embodiments of the present invention, information recording (writing) and information reproducing operations are described. However, the optical pickup device can delete information recorded in the optical recording medium when an optical recording medium suitable for deleting information recorded in the optical recoding medium and a light source suitable for deleting the information recorded in the optical recoding medium are used.

[Industrial applicability]

According to the embodiments of the present invention, in an optical pickup device and an optical information processing apparatus using the optical pickup device, a polarization filter can be obtained in which an amount of light returning to a light source of the optical pickup device from an optical recording medium is minimized. In the polarization filter, the aspect ratio is low and the cost to manufacture the polarization filter is low. In addition, the practicality and the mass productivity of the optical pickup device are high, and the optical pickup device can reduce the amount of unwanted light. Therefore, even if the optical pickup device uses a light source of a twin-beam system having two light sources whose wavelengths are different from each other, the above advantages can be obtained. Consequently, the embodiments of the present invention can be applied to an optical pickup device and an optical information processing apparatus using the optical pickup device.

Further, the present invention is not limited to the embodiments, but various variations and modifications may be made without departing from the scope of the present invention.

**Claims**

1. An optical pickup device which is used to record information in a first optical recording medium (7) and/or a second optical recording medium (7) in which different wavelengths are used from each other, to reproduce information recorded in the first optical recording medium (7) and/or in the second optical recording medium (7), and to delete information recorded in the first optical recording medium (7) and/or in the second optical recording medium (7), comprising:

   a light source (11) which outputs light having a wavelength A1;
   a light condensing unit (4) which condenses the light output from the light source (11) on a recording surface to be accessed of the first or second optical recording media (7);
   a light splitting element (3) which splits light returning from the first or second optical recording media (7) via the light condensing unit, disposed on a light route between the light source (11) and the light condensing unit (4);
   a light receiving element (9) which receives the returning light split by the light splitting element (3) at a predetermined position; and
   a polarization optical element (1) disposed on a light route between the light source (11) and the light splitting element (3); wherein
   the polarization optical element (1) is formed by arraying a periodic structure having a pitch width that has the wavelength of $\lambda 1$ or more;
   the optical pickup device being **characterised by** the polarization optical element (1) further comprising two adjacent orthogonally-formed sub wavelength concave-convex structures having corresponding pitch widths less than the wavelength λ1, and filling factors and groove depths of the two sub wavelength concave-convex structures are determined so that effective refractive indexes of the two sub wavelength concave-convex structures become the same for polarized directions of light output from the light source (11) and a phase difference between the two sub wavelength concave-convex structures becomes n for light having a polarized direction orthogonal to the polarized direction of the light output from the light source (11).

2. The optical pickup device as claimed in claim 1 further comprising:

a second light source (12) which outputs light having a wavelength λ 2 (> λ1); wherein
the light condensing unit (4) condenses the light output from the first light source (11) and the light output from the second light source (12) on a recording surface to be accessed of the first and second optical recording media (7);
the light splitting element (3) splits light returning from the first or second optical recording media (7) via the light condensing unit, disposed on a light route between the first and second light sources (11, 12) and the light condensing unit (4);
the polarization optical element is disposed on a light route between the first and second light sources (11, 12) and the light splitting element (3);
the polarization optical element (1) is formed by arraying a periodic structure having a pitch width that has the wavelength of A 2 or more and two adjacent orthogonally-formed sub wavelength concave- convex structures having corresponding pitch widths less than the wavelength λ1, and
the filling factors and the groove depths of the two sub wavelength concave-convex structures are determined so that effective refractive indexes of the two sub wavelength concave-convex structures become the same for polarized directions of light output from the first and second light sources (11, 12) and a phase difference between the two sub wavelength concave-convex structures becomes n for light having a polarized direction orthogonal to the polarized direction of the light output from the first and second light sources (11, 12).

3. The optical pickup device as claimed in claim 2, wherein:

the first and second light sources (11, 12) are assembled in one package so that the light output from the first and second light sources (11, 12) travels in an approximately equal direction.

4. An optical information processing apparatus, comprising:

an optical pickup device according to claim 2.

5. The optical information processing apparatus as claimed in claim 4, wherein:

the first and second light sources (11, 12) are assembled in one package so that the light output from the first and second light sources (11, 12) travels in an approximately equal direction.

6. An optical information processing apparatus, comprising:

an optical pickup device according to claim 1.

**Patentansprüche**

1. Optische Aufnahmevorrichtung, die verwendet wird, um Informationen in einem ersten optischen Aufzeichnungsmedium (7) und/oder einem zweiten optischen Aufzeichnungsmedium (7), in denen voneinander verschiedene Wellenlängen verwendet werden, aufzuzeichnen, um in dem ersten optischen Aufzeichnungsmedium (7) und/oder in dem zweiten optischen Aufzeichnungsmedium (7) aufgezeichnete Informationen zu reproduzieren und um in dem ersten optischen Aufzeichnungsmedium (7) und/oder in dem zweiten optischen Aufzeichnungsmedium (7) aufgezeichnete Informationen zu löschen, umfassend:

eine Lichtquelle (11), die Licht mit einer Wellenlänge λ1 ausgibt;
eine Licht kondensierende Einheit (4), die das von der Lichtquelle (11) ausgegebene Licht auf einer Aufzeichnungsoberfläche, auf die zuzugreifen ist, des ersten oder zweiten optischen Aufzeichnungsmediums (7) kondensiert;

ein Licht teilendes Element (3), das Licht teilt, das von dem ersten oder zweiten optischen Aufzeichnungsmedium (7) über die Licht kondensierende Einheit zurückkehrt, angeordnet in einer Lichtroute zwischen der Lichtquelle (11) und der Licht kondensierenden Einheit (4);

ein Licht empfangendes Element (9), das das von dem Licht teilenden Element (3) geteilte Licht an einer im Voraus bestimmten Position empfängt; und

ein optisches Polarisationselement (1), angeordnet in einer Lichtroute zwischen der Lichtquelle (11) und dem Licht teilenden Element (3); wobei

das optische Polarisationselement (1) durch Anordnen einer periodischen Struktur mit einer Teilungsbreite der Wellenlänge $\lambda 1$ oder mehr gebildet ist;

die optische Aufnahmevorrichtung **dadurch gekennzeichnet ist, dass** das optische Polarisationselement (1) ferner zwei aneinander angrenzende orthogonal geformte Sub-Wellenlängen-Konkav-Konvex-Strukturen mit korrespondierenden Teilungsbreiten kleiner als die Wellenlänge $\lambda 1$ umfasst und Füllfaktoren und Rillentiefen der beiden Sub-Wellenlängen-Konkav-Konvex-Strukturen so bestimmt sind, dass effektive Brechungsindexe der beiden Sub-Wellenlängen-Konkav-Konvex-Strukturen für polarisierte Richtungen von von der Lichtquelle (11) ausgegebenem Licht die gleichen werden und eine Phasendifferenz zwischen den beiden Sub-Wellenlängen-Konkav-Konvex-Strukturen für Licht mit einer polarisierten Richtung orthogonal zu der polarisierten Richtung des von der Lichtquelle (11) ausgegebenen Lichts n wird.

2.  Optische Aufnahmevorrichtung nach Anspruch 1, ferner umfassend:

eine zweite Lichtquelle (12), die Licht mit einer Wellenlänge $\lambda 2$ ($> \lambda 1$) ausgibt; wobei

die Licht kondensierende Einheit (4) das von der ersten Lichtquelle (11) ausgegebene Licht und das von der zweiten Lichtquelle (12) ausgegebene Licht auf einer Aufzeichnungsoberfläche, auf die zuzugreifen ist, des ersten und zweiten optischen Aufzeichnungsmediums (7) kondensiert;

das Licht teilende Element (3) Licht teilt, das von dem ersten oder zweiten optischen Aufzeichnungsmedium (7) über die Licht kondensierende Einheit zurückkehrt, angeordnet in einer Lichtroute zwischen der ersten und zweiten Lichtquelle (11, 12) und der Licht kondensierenden Einheit (4);

das optische Polarisationselement in einer Lichtroute zwischen der ersten und zweiten Lichtquelle (11, 12) und dem Licht teilenden Element (3) angeordnet ist;

das optische Polarisationselement (1) durch Anordnen einer periodischen Struktur mit einer Teilungsbreite der Wellenlänge $\lambda 2$ oder größer und zwei aneinander angrenzenden orthogonal geformten Sub-Wellenlängen-Konkav-Konvex-Strukturen mit korrespondierenden Teilungsbreiten kleiner als die Wellenlänge $\lambda 1$ gebildet ist, und

die Füllfaktoren und die Rillentiefen der beiden Sub-Wellenlängen-Konkav-Konvex-Strukturen so bestimmt sind, dass effektive Brechungsindexe der beiden Sub-Wellenlängen-Konkav-Konvex-Strukturen für polarisierte Richtungen von von der ersten und zweiten Lichtquelle (11, 12) ausgegebenem Licht die gleichen werden und eine Phasendifferenz zwischen den beiden Sub-Wellenlängen-Konkav-Konvex-Strukturen für Licht mit einer polarisierten Richtung orthogonal zu der polarisierten Richtung des von der ersten und zweiten Lichtquelle (11, 12) ausgegebenen Lichts n wird.

3.  Optische Aufnahmevorrichtung nach Anspruch 2, wobei:

die erste und zweite Lichtquelle (11, 12) in einer Baugruppe zusammengebaut sind, so dass das von der ersten und zweiten Lichtquelle (11, 12) ausgegebene Licht sich in einer ungefähr gleichen Richtung bewegt.

4.  Optisches Informationsverarbeitungsgerät, umfassend:

eine optische Aufnahmevorrichtung nach Anspruch 2.

5.  Optisches Informationsverarbeitungsgerät nach Anspruch 4, wobei:

die erste und zweite Lichtquelle (11, 12) in einer Baugruppe zusammengebaut sind, so dass das von der ersten und zweiten Lichtquelle (11, 12) ausgegebene Licht sich in einer ungefähr gleichen Richtung bewegt.

6.  Optisches Informationsverarbeitungsgerät, umfassend:

eine optische Aufnahmevorrichtung nach Anspruch 1.

**Revendications**

1. Dispositif de capteur optique lequel est utilisé en vue d'enregistrer des informations dans un premier support d'enregistrement optique (7) et/ou dans un second support d'enregistrement optique (7), dans lequel des longueurs d'onde mutuellement distinctes sont utilisées, en vue de reproduire des informations enregistrées dans le premier support d'enregistrement optique (7) et/ou dans le second support d'enregistrement optique (7), et en vue de supprimer des informations enregistrées dans le premier support d'enregistrement optique (7) et/ou dans le second support d'enregistrement optique (7), comprenant :

   une source de lumière (11) qui génère en sortie de la lumière présentant une longueur d'onde $\lambda 1$;
   une unité de focalisation de la lumière (4) qui focalise la lumière générée en sortie à partir de la source de lumière (11) sur une surface d'enregistrement, devant être accédée, du premier ou du second support d'enregistrement optique (7) ;
   un élément de séparation de la lumière (3) qui sépare la lumière renvoyée par le premier ou le second support d'enregistrement optique (7), par l'intermédiaire de l'unité de focalisation de la lumière, agencé sur un itinéraire de la lumière entre la source de lumière (11) et l'unité de focalisation de la lumière (4) ;
   un élément de réception de la lumière (9) qui reçoit la lumière renvoyée, séparée par l'élément de séparation de la lumière (3), au niveau d'une position prédéterminée ; et
   un élément optique de polarisation (1) agencé sur un itinéraire de la lumière entre la source de lumière (11) et l'élément de séparation de la lumière (3) ; dans lequel
   l'élément optique de polarisation (1) est formé en disposant une structure périodique présentant une largeur de pas qui présente la longueur d'onde de $\lambda 1$ ou plus ;
   le dispositif de capteur optique étant **caractérisé en ce que** l'élément optique de polarisation (1) comprend en outre deux structures concaves-convexes de sous-longueurs d'onde formées orthogonalement et adjacentes présentant des largeurs de pas correspondantes inférieures à la longueur d'onde $\lambda 1$, et **en ce que** des facteurs de remplissage et des profondeurs de rainure des deux structures concaves-convexes de sous-longueurs d'onde sont déterminés de sorte que des indices de réfraction efficaces des deux structures concaves-convexes de sous-longueurs d'onde deviennent identiques pour des directions polarisées de la lumière générée en sortie à partir de la source de lumière (11) et qu'une différence de phase entre les deux structures concaves-convexes de sous-longueurs d'onde devient n pour une lumière ayant une direction polarisée orthogonale à la direction polarisée de la lumière générée en sortie à partir de la source de lumière (11).

2. Dispositif de capteur optique selon la revendication 1, comprenant en outre :

   une seconde source de lumière (12) qui génère en sortie de la lumière présentant une longueur d'onde $\lambda 2$ (> $\lambda 1$); dans lequel
   l'unité de focalisation de la lumière (4) focalise la lumière générée en sortie à partir de la première source de lumière (11) et la lumière générée en sortie à partir de la seconde source de lumière (12) sur une surface d'enregistrement, devant être accédée, des premier et second supports d'enregistrement optique (7) ;
   l'élément de séparation de la lumière (3) sépare la lumière renvoyée par le premier ou le second support d'enregistrement optique (7), par l'intermédiaire de l'unité de focalisation de la lumière, agencé sur un itinéraire de la lumière entre les première et seconde sources de lumière (11, 12) et l'unité de focalisation de la lumière (4) ;
   l'élément optique de polarisation est agencé sur un itinéraire de la lumière entre les première et seconde sources de lumière (11, 12) et l'élément de séparation de la lumière (3) ;
   l'élément optique de polarisation (1) est formé en disposant une structure périodique présentant une largeur de pas qui présente la longueur d'onde de $\lambda 2$ ou plus et deux structures concaves-convexes de sous-longueurs d'onde formées orthogonalement et adjacentes présentant des largeurs de pas correspondantes inférieures à la longueur d'onde $\lambda 1$ ; et
   les facteurs de remplissage et les profondeurs de rainure des deux structures concaves-convexes de sous-longueurs d'onde sont déterminés de sorte que des indices de réfraction efficaces des deux structures concaves-convexes de sous-longueurs d'onde deviennent identiques pour des directions polarisées de la lumière générée en sortie à partir des première et seconde sources de lumière (11, 12) et qu'une différence de phase entre les deux structures concaves-convexes de sous-longueurs d'onde devient n pour une lumière ayant une direction polarisée orthogonale à la direction polarisée de la lumière générée en sortie à partir des première et seconde sources de lumière (11, 12).

3. Dispositif de capteur optique selon la revendication 2, dans lequel :

les première et seconde sources de lumière (11, 12) sont assemblées dans un boîtier unique, de sorte que la lumière générée en sortie à partir des première et seconde sources de lumière (11, 12) se déplace dans une direction approximativement identique.

4. Dispositif de traitement d'informations optiques, comprenant :

   un dispositif de capteur optique selon la revendication 2.

5. Dispositif de traitement d'informations optiques selon la revendication 4, dans lequel :

   les première et seconde sources de lumière (11, 12) sont assemblées dans un boîtier unique, de sorte que la lumière générée en sortie à partir des première et seconde sources de lumière (11, 12) se déplace dans une direction approximativement identique.

6. Dispositif de traitement d'informations optiques, comprenant:

   un dispositif de capteur optique selon la revendication 1.

# FIG.1

P-POLARIZED
LIGHT DIRECTION

LIGHT TRAVELING DIRECTION

S-POLARIZED
LIGHT DIRECTION

EP 2 250 645 B1

# FIG.2

(a)

(b)

S-POLARIZED LIGHT DIRECTION

P-POLARIZED LIGHT DIRECTION

1

1

FIG.3

SUB WAVELENGTH CONCAVE-CONVEX STRUCTURE A

SUB WAVELENGTH CONCAVE-CONVEX STRUCTURE B

d1

q1

m1

d2

q2

m2

P

L

1

LIGHT TRAVELING DIRECTION

S-POLARIZED LIGHT DIRECTION

P-POLARIZED LIGHT DIRECTION

# FIG.4

FIG.5

(a)

(b)

FIG.6

(a)

GROOVE DEPTH 0.5 $\mu$m

IN DVD

0-ORDER DIFFRACTION EFFICIENCY
OF S-POLARIZED LIGHT

0-ORDER DIFFRACTION EFFICIENCY
OF P-POLARIZED LIGHT

± FIRST-ORDER DIFFRACTION EFFICIENCY
OF P-POLARIZED LIGHT

(b)

GROOVE DEPTH 0.5 $\mu$m

IN CD

0-ORDER DIFFRACTION EFFICIENCY
OF S-POLARIZED LIGHT

0-ORDER DIFFRACTION EFFICIENCY
OF P-POLARIZED LIGHT

± FIRST-ORDER DIFFRACTION EFFICIENCY
OF P-POLARIZED LIGHT

EP 2 250 645 B1

FIG.7

**FIG.8**

(a) 52 51 50

(b) 53 50

DRY ETCHING SURFACE

(c) 50

(d) p a b d 50

FIG.9

(a)

52

51

55

(b)

53

55

(c)

DRY ETCHING SURFACE

55

(d)

p

a

b

d

55

# FIG.10

(a)

Ta₂O₅ FILM

GLASS SUBSTRATE

(b)

MOLDING DIE

UV HARDENING RESIN

Ta₂O₅ FILM

GLASS SUBSTRATE

(c)

RADIATE UV RAYS    MOLDING DIE

UV HARDENING RESIN

Ta₂O₅ FILM

GLASS SUBSTRATE

(d)

SEPARATE MOLDING DIE

MOLDING DIE

RESIN MASK PATTERN

Ta₂O₅ FILM

GLASS SUBSTRATE

(e)

DRY ETCHING

Ta₂O₅ FILM

GLASS SUBSTRATE

(f)

REMAINING RESIN MASK

Ta₂O₅ FILM

GLASS SUBSTRATE

(g)

Ta₂O₅ FILM

GLASS SUBSTRATE

# FIG.11

(a)

Si FILM

GLASS SUBSTRATE

(b)

MOLDING DIE

UV HARDENING RESIN

GLASS SUBSTRATE

(c)

RADIATE UV RAYS   MOLDING DIE

UV HARDENING RESIN

GLASS SUBSTRATE

(d)

SEPARATE MOLDING DIE

MOLDING DIE

RESIN MASK PATTERN

GLASS SUBSTRATE

(e)

DRY ETCHING

GLASS SUBSTRATE

(f)

DRY ETCHING

GLASS SUBSTRATE

(g)

DRY ETCHING

GLASS SUBSTRATE

(h)

REMOVE REMAINING Si FILM

GLASS SUBSTRATE

(i)

GLASS SUBSTRATE

FIG.12

(a) Si FILM
GLASS SUBSTRATE

(b) RESIST
GLASS SUBSTRATE

(c) PATTERN
GLASS SUBSTRATE

(d) DRY ETCHING
GLASS SUBSTRATE

(e) DRY ETCHING
GLASS SUBSTRATE

(f) REMOVE REMAINING Si FILM
GLASS SUBSTRATE

(g) GLASS SUBSTRATE

# FIG.13

SERVO CONTROL CIRCUIT

SYSTEM CONTROLLER

EP 2 250 645 B1

# FIG.14

EP 2 250 645 B1

EP 2 250 645 B1

FIG.15

(a)

LIGHT SOURCE
20

(b)

LIGHT SOURCE
20

FIG.16

EP 2 250 645 B1

FIG.17

EP 2 250 645 B1

**EP 2 250 645 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002170272 A
- JP 2006318568 A
- US 2006256696 A
- JP 2005141849 A